# EUROPEAN PATENT SPECIFICATION

(11) **EP 4 085 526 B1**
(45) Date of publication and mention of the grant of the patent: **07.02.2024**
(21) Application number: 20838084.0
(22) Date of filing: 22.12.2020
(51) Int. Cl.: H02S 20/00, F24S 20/70

(54) **FLOATING SOLAR PANELS**
SCHWIMMENDE SOLARPANEELE
PANNEAUX SOLAIRES FLOTTANTS

(30) Priority: 23.12.2019 GB 201919182
(43) Date of publication of application: 09.11.2022
(73) Proprietor: SUNLIT SEA AS, 7010 Trondheim (NO)
(72) Inventor: LINDBERG, Per Filip, 0566 Oslo (NO)
(74) Representative: Linn, Samuel Jonathan
(86) International application number: PCT/EP2020/087722
(87) International publication number: WO 2021/130283

(56) References cited:
- JP-A- 2002 118 275
- JP-A- 2019 024 302

## Description

### TECHNICAL FIELD

This invention relates to floating solar panels. More particularly, though not exclusively, the invention relates to modular solar panel units for use in generating electricity from solar energy, which solar panel units are designed to float on water. In some embodiments the modular solar panel units may be designed to be interconnectable so as be able to form a solar panel array for use in generating electricity from solar energy. The invention also relates to a method for making such floating modular solar panel units, and also to a method of generating solar-derived electricity using the said floating solar panel units or arrays.

### BACKGROUND OF THE INVENTION AND PRIOR ART

Recent years have seen a marked increase in public awareness and efforts by governments around the world towards developing and investing in alternative sources of electric power and moving away from the traditional reliance on fossil fuels. Indeed, with increasing evidence of undesirable climate change caused by the burning of fossil fuels, the need to find and render more economical newer sources of electric power such as those involving the harnessing of wind and solar energy is rapidly gaining urgency.

Solar power - in which the sun's energy is harnessed and converted into electricity by solar or photovoltaic modules (or "panels"), each of which comprises a series-connected plurality of individual solar or photovoltaic cells, and which modules may typically be grouped and connected together into solar arrays of any, even large, numbers of such modules - is one area where there has been marked growth in recent years, especially with advances in photovoltaic cell technology and reductions in the price of solar panels and their components. Many known solar power generation installations are land-based, but increasingly the siting of solar arrays in marine or other water environments is becoming more attractive, especially when land space is limited or unavailable or when available land-based sites are not of optimum topography or accessibility or do not enjoy optimum sunlight exposure.

In order to be deployable at sea or in other water-based environments, solar panels or solar arrays need to be supported on or at the surface of the body of water in question, so that the photovoltaic cells which form the key functional elements of the panels/arrays are supported above the water surface where they can operate correctly and optimally to collect and convert solar energy into electricity.

Hitherto there have been various proposals for designs of systems for so supporting solar panels or arrays of solar panels. Generally these known systems utilize some kind of mechanical frame or other support structure or supporting arrangement by which individual solar panels are mounted in a supported manner above the water surface, especially at or near a shoreline. However, these known systems all tend to suffer from various drawbacks which make them difficult or uneconomical to deploy and use. For instance:
- they are generally mechanically complex and over-engineered,
- they comprise a large number of components and are costly to manufacture,
- they are cumbersome and costly to transport to a desired site, leading to inefficient logistics,
- they are time-consuming and labour-intensive to assemble on-site,
- they generally necessitate on-site assembly, which can be inefficient given that such environments often do not lend themselves well to the carrying out of efficient mechanical assembly operations,
- they are difficult or impossible to scale-up, and
- they often do not adequately tackle operational problems caused by high waves or high winds.

There are also known some floating solar panel systems which utilize various designs of floats or floating bodies (e.g. plastics or foam-filled floating bodies or pontoons) to support the solar panels as required above the water surface. However, again these known floating systems typically suffer from several or even all of the above problems, and in particular still tend to be over-engineered, costly and time-consuming to deploy, and difficult or impossible to scale-up. Documents JP2002118275 A and JP2019024302 A disclose floating solar battery power generator as known from the prior art.

It is a primary object of this invention to address and ameliorate, or at least partially solve, at least some of the above problems associated with known marine or other water-based solar panel systems and, in particular, known floating solar panel systems.

### SUMMARY OF THE INVENTION

The subject matter of the present invention is defined in claims 1 and 13.

Accordingly, in a first aspect the present invention provides a solar panel unit comprising a body having an upper wall and a lower wall, and an internal volume located between the upper and lower walls such that the body is able to float on water when placed thereon, and
one or more photovoltaic modules mounted on an upper surface of the upper wall of the body,
wherein at least one of the upper and lower walls of the body is formed from a drawn sheet material.

In many embodiments both of the upper and the lower walls of the body may be formed from a drawn sheet material.

In many embodiments the upper and/or lower walls of the body may be formed from a deep-drawn sheet material. In the context of this specification the term "deep-drawn" means that the depth of the plastic deformation of the sheet material from its planar as-manufactured state exceeds the width of the drawn area of the sheet material.

As used herein the terms "drawn" and "deep-drawn", and their equivalent terms "drawing" and "deep-drawing", mean that the relevant sheet material has undergone (or undergoes) a post-manufacture step of mechanically subjecting the material to plastic deformation using a die or press, as a result of which the sheet material has undergone (or undergoes) flow and/or stretching so as to assume the internal shape of the die or press and thus adopt the modified contoured shape as desired of the finished drawn/deep-drawn body wall component of the floating solar panel unit.

Drawing and deep-drawing of sheet materials, especially sheet metals, are *per se* well-known industrial techniques, especially for example in the automotive industry for the manufacture of vehicle body components and other specially shaped parts, but hitherto such drawing or deep-drawing material shaping techniques have not been employed for the manufacture of solar panel bodies in the solar power field. For use in the present invention any suitable known apparatus and processing techniques and conditions, e.g. the use of optimum die/moulding pressures and use of suitable lubricants to facilitate the sheet material's plastic flow in the die or press, may be used.

Accordingly, in another aspect of the present invention there is provided a method of making a body for use in a solar panel unit, the body being for use in carrying one or more photovoltaic modules of the unit, wherein the body comprises an upper wall and a lower wall, and an internal volume located between the upper and lower walls such that the body is able to float on water when placed thereon,
wherein the method comprises forming at least one of the upper and lower walls of the body by drawing or deep-drawing it from sheet material.

As an extension of the preceding method, in a yet further aspect of the present invention there is provided a method of making a solar panel unit, comprising:
forming a body of the unit by means of a method according to the preceding defined method, and
mounting on an upper surface of the upper wall of the body one or more photovoltaic modules.

In some embodiments of the invention the material from which at least the upper (and optionally also the lower) body wall(s) is/are formed may be a material with a high or good thermal conductivity, e.g. with a thermal conductivity value of at least about 50 or 60 or 70 or 80 or 90 or 100 or 150 W/mK. This may be desirable in some embodiments in order that the upper (and possibly also the lower) body wall(s) may be able to act as a heat sink to absorb, and possibly also to transmit into the water below on/in which it is floating during use, any excess heat generated by the photovoltaic cells in the module(s) mounted thereon during their operation.

In many embodiments of the invention the material from which the upper and/or lower body walls are formed may be a metal or a metal alloy. One currently preferred example of such a metal or alloy is aluminium or an aluminium alloy. Suitable aluminium alloys may include alloys of aluminium with one or more other metals or other elements such as magnesium, copper, manganese, silicon, tin or zinc. Specific examples of such Al-based alloys are widely known and available *per se* in the art.

For use in the invention the sheet material which forms the upper and lower walls of the body may have any suitable and desired thickness, which generally will be readily selectable by a skilled person so as to provide an optimum balance of mechanical strength and rigidity of the body walls and weight of the overall body.

In many practical embodiments the body which forms the main structure of the solar panel unit may be shaped and dimensioned such that it is able to optimally float on or adjacent a surface of a body of water, e.g. the sea or a lake or reservoir or other body of water, in a generally stable manner with the one or more photovoltaic modules carried or mounted on its upper wall upper surface in an optimum configuration for exposure to sunlight. To assist this, in many embodiments the body which forms the main structure of the solar panel unit may be dimensioned so as to have a generally horizontal length and/or width which is/are greater, especially several times (e.g. at least about 2 or 3 or 4 or 5 or 6 or 7 or 8 or 9 or 10 or 12 or 15 or 20 or 30 or 40 or 50 or perhaps even more than 50 times) greater, than its vertical height (the latter being defined by the spacing of the body's upper and lower walls). Furthermore, since a particular configuration and/or orientation which optimizes the one or more photovoltaic modules' exposure to sunlight may depend on various factors, such as the latitude at which the solar panel units are to be deployed, time of day, weather conditions, etc, it may if desired be arranged that the means of mounting or carrying the photovoltaic module(s) on the body upper wall may include additional configuring and/or orienting means for optimizing their configuration and/or orientation relative to the sunlight depending on how and where they are to be deployed.

In some embodiments the upper and lower walls which define therebetween the internal volume of the body may each be shaped so as to include a central portion and a peripheral border portion, especially a peripheral border portion that surrounds the respective central portion.

In some such embodiments the central portion of at least the upper body wall, which is that wall which has the one or more photovoltaic modules mounted thereon, may be formed as, or may comprise, a plateau portion for carrying the respective photovoltaic module(s) thereon, which plateau portion has a raised profile or configuration relative to the peripheral border portion of the body's upper wall.

In some such embodiments the central portion of at least the upper body wall, which is that wall which has the one or more photovoltaic modules mounted thereon, or at least the plateau portion thereof, may be generally substantially planar, in order to facilitate the stable mounting thereon of the photovoltaic module(s) (which may typically themselves be generally planar). However, in such, or even other, embodiments the shape of each respective peripheral border portion of the upper and lower body walls may be less constrained in its optimum shape or contour. For example, each respective peripheral border portion of the upper and lower body walls may be configured so as to be shaped as a substantially planar peripheral flange or border portion of any suitable width, or alternatively some other non-planar shaped border portion.

If desired or appropriate each respective peripheral border portion of the upper and lower body walls may be connected to the respective central wall portion by a bridging portion, which bridging portion may itself be suitably shaped or contoured to create any desired peripheral region shape of the overall body, including perhaps for optimizing its water-floating capability or stability.

Nevertheless, in many embodiments the respective peripheral border portions of the upper and lower body walls may provide or include means by which, or site(s) at which, the upper and lower body walls are united or bonded together by means of a watertight joint to form the finished body. In some embodiments the upper and lower body walls may be united or bonded together by means of their respective peripheral border portions being welded together, for example by (e.g. roller welding or other known welding technique), which may be especially suitable in the case of a metal or metal alloy as the body wall material. As an alternative to welding, a suitable sort of soldering, brazing or other fusion technique may be employed instead. As a further alternative, instead of a welding or other fusion technique, the respective peripheral border portions of the upper and lower body walls may be adhered together, by means of any suitable adhesive, examples of which are well known in the art.

Furthermore, in some embodiments the respective peripheral border portions of the upper and lower body walls via which the upper and lower body walls are united or bonded together to form the finished body may additionally provide or include one or more locations or regions at which are provided interconnection means by which the unit may be interconnectable to one or more adjacent like solar panel units, especially for the purpose of building up a solar array of a plurality of such solar panel units. Further features of such interconnection means and solar arrays will be discussed further below.

In some practical embodiments of the invention the body of the solar panel unit may be shaped so as to have a generally rectangular, e.g. square, shape in plan view. This may be desirable from the point of view of optimizing the use of the surface area of the upper body wall and also enabling plural such units to be interconnected (as discussed further below). Of course, other plan body shapes may be adopted instead, if desired or appropriate.

In some embodiments of the solar panel unit of the invention the internal volume within the body may comprise one or more voids or spaces therewithin, so that the body of the unit is substantially or at least partially hollow, whereby the body is able to float on water when placed thereon. In some embodiments the one or more voids or spaces may contain air or some other gas or mixture of gases (e.g. a substantially unreactive and stable gas such as nitrogen or carbon dioxide), which may simply be trapped therein upon the body being sealed during its manufacture.

Alternatively, however, in other embodiments the one or more voids or spaces may contain a foamed or porous (e.g. open-cell or closed-cell porous) material, or other lightweight material, e.g. of a synthetic polymer or plastics material, which may for example be formed *in situ* or poured or pumped therein once the main structure of the body of the unit has been formed and is about to sealed. Alternatively, a foamed or foam-forming composition could be poured or pumped into the already formed body, e.g. via a nozzle or hole or vent, after it has been sealed.

In some embodiment forms of the solar panel unit body, the internal volume therewithin is provided with a series or array of internal partitions, baffles, honeycomb elements or other internal space-dividing or internal space-reducing elements.

In some such embodiments either one or both of the upper and/or lower walls of the body comprise(s) an array or series of dimples, depressions, indentations, recesses or other surface deformations which extend or protrude into the internal volume or space within the body. These surface deformations may be formed by appropriate local deformation, shaping or moulding of the respective sheet material which forms the respective upper and/or lower body wall(s), which may for example be achieved by appropriate shaping of the die or press used to form the respective wall(s) during its/their initial drawing or deep-drawing forming stage. Alternatively, a suitable post-drawing (or post-deep-drawing) shaping procedure may be employed instead to create the appropriate array or series of surface deformations in the relevant wall sheet(s).

In some such embodiment forms both of the upper and lower body walls may each comprise its own respective array or series of dimples, depressions, indentations, recesses or other surface deformations formed therein. The pattern or arrangement of the arrays or series of surface deformations may be substantially the same or different (or may be symmetrical or asymmetrical relative to each another) in each of the wall sheets. However, in some embodiment forms the pattern or arrangement of the arrays or series of surface deformations may be substantially the same in each of the wall sheets, such that respective ones of the dimples, depressions, indentations, recesses or other surface deformations formed in one of the upper and lower wall sheets substantially match and extend or protrude inwardly into the internal volume or space within the body towards respective ones of the dimples, depressions, indentations, recesses or other surface deformations formed in the other of the upper and lower wall sheets.

The thus matching and mutually internally facing dimples, depressions, indentations, recesses or other surface deformations in each of the two wall sheets may in some embodiment forms be of an appropriate depth such that they remain spaced apart from one another in the internal volume of the body, so that they do not internally meet or touch within the depth or thickness of the body. However, in other embodiment forms the mutually internally facing dimples, depressions, indentations, recesses or other surface deformations in each of the two wall sheets may be of a sufficient depth such that they do indeed internally meet or touch or abut each other (especially in mutually facing pairs thereof) within the internal volume of the body, e.g. midway between the two wall sheets. If desired or appropriate, the thus internally meeting, touching or abutting pairs of dimples, depressions, indentations, recesses or other surface deformations may be united or bonded to one another (e.g. by welding or adhesive), which uniting or bonding may conveniently be effected during the body's assembly stage when the pre-formed upper and lower wall sheets are brought together and mutually united or bonded together. Such uniting/bonding of the internally meeting, touching or abutting pairs of dimples, depressions, indentations, recesses or other surface deformations may usefully serve to enhance the structural rigidity, strength and integrity of the overall solar panel unit, as well as helping to stably support the photovoltaic module(s) mounted on the body's upper wall surface.

In practical embodiments of the invention the or each photovoltaic module mounted on the upper surface of the upper wall of the body may be of any suitable known type, construction and electrical parameters. The art of solar panels contains many practical examples of photovoltaic modules that are commercially available, and the present invention is not limited to the use of any one type or range of types of such known photovoltaic modules. The photovoltaic modules for use in the invention may be employed in any desired or suitable number(s), layout(s) and physical arrangement(s) mounted or carried on the upper wall of the or a respective solar panel unit. For example, two rectangular photovoltaic modules, positioned side-by-side, per solar panel unit may be suitable and practical in some example embodiments, although other numbers of modules (e.g. 1, 3, 4 or perhaps even more than 4) per solar panel unit may possibly be used instead in other example embodiments.

Moreover, the or a respective solar panel unit may include any appropriate wiring and/or auxiliary electric or electronic components by means of which the photovoltaic cells themselves and the module(s) of that unit may be electrically connectable to either (i) a collector or storage or base station or the like for either near-to-site electrical storage or onward transmission of electricity generated by the unit to wherever it is needed (e.g. into an electrical power supply or distribution network or system), or (ii) one or more adjacent or interconnected solar panel units, or (iii) both (i) and (ii). [By way of practical example only: Solar panels may often in practice be connected in series (e.g. typically approx. 20 to 30 panels in series), called a string. i.e. made up of approx. 10 to 20 solar panel units in example embodiments of the invention which employ two panels per unit. The string may thereafter either be connected directly to an inverter or parallel coupled to one or more other strings and thereafter connected to an inverter. The inverter may be connected to a (typically medium voltage) transformer. If the array is large, the (medium voltage) transformer may be located on large barges/floats within the array. Thereafter power lines may lead to a high voltage transformer on shore which may connect to a high voltage grid. Of course, other physical and electrical arrangements may be possible in any given practical scenario.

In some embodiments of the invention the or each photovoltaic module mounted on the upper surface of the upper wall of the body may be so mounted such that it is in thermal contact with the material of at least one or more (especially at least some) portions of the body upper wall, in order to facilitate transfer of any excess heat generated by the photovoltaic cells away therefrom and into the material of the body walls during use, and possibly also to transmit such excess heat into the water below the unit body on/in which it is floating during use.

In some embodiments of the invention, in order to assist in maintaining the rear side of the or each photovoltaic module dry, there may be provided a desiccant material, e.g. in the form of a layer, strip or volume thereof, between, or in a space between, the or each photovoltaic module and the upper surface of the upper wall of the body on which it is mounted. Practical examples of suitable desiccant materials are well-known and widely available in the art.

In some practical embodiments of the invention, again in order to assist in maintaining the rear side of the or each photovoltaic module dry and to prevent or inhibit the ingress of water into any gap or space between the or each photovoltaic module and the upper wall of the unit body, the or each photovoltaic module mounted on the upper surface of the upper wall of the body (especially on an upper central or plateau portion thereof) may be mounted thereon with the assistance or inclusion of sealing means, especially peripheral sealing means. Thus, in some embodiments the or each photovoltaic module may be mounted on the upper surface of the upper wall of the body by virtue of being bonded thereto at least along one or more peripheral or edge portions or regions of the solar panel unit by virtue of bonding means which additionally may serve as sealing means. Such peripheral sealing and/or bonding means may comprise a strip or elongate body of a suitable sealant and/or bonding material or composition, e.g. a silicone material (practical examples of which are well-known and widely available in the art).

In such embodiments, such a peripheral sealing and/or bonding strip or elongate body of the sealant and/or bonding material/composition may be provided or located to or on or adjacent an outer side of a stepped or ramped portion of the upper wall of the unit body which defines a said plateau portion thereof on which the respective photovoltaic module(s) is/are mounted. In such embodiments it may thus be the case that one or more portions of the or each photovoltaic module overhangs the stepped or ramped portion of the upper wall plateau portion of the unit body by a short distance (e.g. up to around 15 or 20 or 25 or 30 or 35 or 40 mm) which is sufficient to provide an elongate sealing and/or bonding site extending around, especially substantially completely and continuously around, the periphery or edges of the solar panel unit between the overhanging portion(s) of the or each photovoltaic module and a peripheral border portion of the unit body.

In many practical embodiments of the invention, the or each photovoltaic module may comprise a plurality of interconnected individual photovoltaic cells sandwiched between one or more upper layers (e.g. including at least a glass front panel layer) and at least one rear supporting layer (e.g. including at least a rear protective layer of one or more synthetic polymer materials or a synthetic polymer laminate, e.g. comprising PVF (polyvinylfluoride) and/or PET (polyethylenterephthalate)). In many known designs of photovoltaic modules the one or more upper layers (especially an upper glass layer) may be of substantially the same facial dimensions and lateral extent (or lateral width) as the at least one rear supporting layer (especially a lower polymer laminate layer). In such embodiments the aforementioned elongate sealing and/or bonding site extending around, especially substantially completely and continuously around, the periphery or edges of the solar panel unit may thus provide the said sealing and/or bonding between the at least one rear supporting layer of the overhanging portion(s) of the or each photovoltaic module and a peripheral border portion of the unit body.

However, in some new designs of photovoltaic modules, the at least one rear supporting layer (especially a lower polymer laminate layer) may be of truncated or foreshortened facial dimensions or a reduced lateral width or extent compared with the one or more upper layers (especially an upper glass layer) of the or each module. Such truncated or foreshortened facial dimensions or a reduced lateral width or extent of the at least one rear supporting layer, compared with the overlying one or more upper layer(s), may for example be up to around 10 or 15 or 20 mm on each lateral side of the solar panel unit. In such embodiments the aforementioned elongate sealing and/or bonding site extending around, especially substantially completely and continuously around, the periphery or edges of the solar panel unit may thus provide the said sealing and/or bonding between the upper layer, e.g. glass front panel, of the overhanging portion(s) of the or each photovoltaic module and a peripheral border portion of the unit body.

Accordingly, in a yet further aspect of the invention there may independently be provided a photovoltaic module for use in a solar panel unit, the module comprising a plurality of interconnected photovoltaic cells sandwiched between one or more upper layers (e.g. including at least a glass front panel layer) and at least one rear supporting layer (e.g. including at least a rear protective layer of one or more synthetic polymer materials or a synthetic polymer laminate, e.g. comprising PVF (polyvinylfluoride) and/or PET (polyethylenterephthalate)), wherein the at least one rear supporting layer is of truncated or foreshortened facial dimensions or a reduced lateral width or extent compared with the one or more upper layers of the module. Embodiments of such a photovoltaic module may be utilised in any embodiment solar panel unit as defined or described herein in the context of embodiments of the other aspects of the invention.

In some practical implementations of the present invention, there may be provided a plurality of solar panel units, especially a plurality of like solar panel units, each of which is a solar panel unit according to the first aspect of the invention or any embodiment thereof, and pairs or other numbers of the said solar panel units may be interconnectable together to form a solar array. Such a plurality of solar panel units may for instance be provided as, or as part of, a kit or set of component parts, optionally together with any additional required components, for assembly into a solar array.

Accordingly, in another aspect of the present invention there is provided a solar panel array comprising a plurality of solar panel units, each solar panel unit being a solar panel unit according to the first aspect of the invention or any embodiment thereof.

In many practical embodiments of such a solar array, at a basic level one or more pairs or combinations of two, three or four (or possibly more than four) solar panel units may be interconnected via respective interconnection means provided on each respective pair of solar panel units to be interconnected. Going further, for building up a solar array containing more solar panel units - possibly up to a large number of such solar panel units (e.g. up to several hundred, or even up to several thousand, or possibly even into the millions of units) - further solar panel units or pairs or combinations or strings of units may be added in a corresponding manner, with the necessary interconnections between units or groups of units being made as further units or groups of units are added to form the final array. In some practical implementations, such pairs or combinations or strings of solar panel units may usefully be pre-assembled together with one another, e.g. in a folded-over, hinged or concertina-like fashion, especially so pre-assembled off-site before being brought to an installation location for the solar array. Such off-site prefabrication and partial pre-assembly of such pairs or combinations of solar panel units may thus enable on-site operations to be streamlined and the time and cost of on-site installation activity to be significantly reduced.

For the purpose of permitting or enabling such interconnectability, in some embodiments of the solar panel unit of the first aspect of the present invention, the unit may comprise at least one, optionally a plurality of, interconnection means for interconnecting the said unit to another, like solar panel unit also in accordance with the first aspect of the invention.

In some embodiments the or each interconnection means may comprise an interconnection member, the or each interconnection member being constructed and configured for attachment to both a first and a second said solar panel unit body, whereby the said first and second solar panel units are interconnectable via the said, or the said respective, interconnection member.

The or each interconnection member may take any of various practical embodiment forms:
In some embodiments the or each interconnection member may comprise a resilient or flexible or resiliently flexible interconnection portion, especially such a portion which is resiliently flexible in each of two opposite directions, whereby when attached to both of the first and second solar panel unit bodies it provides a two-way, or "push-pull", resiliently flexible connection therebetween. This may have an advantage that such an interconnection leads to a more versatile, stable and secure connection between the two solar panel unit bodies, especially in marine or other water-based environments where the surface of the water may not be uniform or stable and the ability for adjacent solar panel units to be able to pivot, hinge, pitch or yaw or mutually translate relative to one another by short distances (e.g. distances of from a few or several (e.g. about 1 to 10) millimetres up to a few or several (e.g. from about 1 or 5 up to about 10 or 15 or perhaps even 20) centimetres) may be especially desirable.

In some such embodiment forms the interconnection portion of the or each said interconnection member may comprise an annular or toroidal or cylindrical body or ring of resiliently flexible material, e.g. a rubber or an elastomeric material. Examples of suitable such materials may include various known urethane or polyurethane rubbers, which may or may not be fibre-reinforced variants thereof, and specific commercially available examples of all the aforesaid materials are widely known and available in the art. Of course, other suitable rubbers or elastomeric materials, including fibre-reinforced variants, may be available and able to be used instead, as will be readily available to, and able to be appropriately selected by, persons skilled in the art.

In some such embodiment forms the or each respective annular or toroidal or cylindrical body or ring of the or the respective interconnection member may constitute a central interconnection portion of the respective interconnection member, and the interconnection member may further comprise:
a first attachment portion, especially a first attachment tab portion, for attachment to a connection site on a first said solar panel unit body,
a second attachment portion, especially a second attachment tab portion, for attachment to a connection site on a second said solar panel unit body,
wherein the first and second attachment (especially tab) portions are each connected to the central interconnection portion of the respective interconnection member on opposite sides, especially diametrically opposite side, thereof.

In some such embodiment forms the first and second attachment (especially tab) portions and the central interconnection portion of the or the respective interconnection member may be unitary with each other, such that all three portions of the or the respective interconnection member form a one-piece component, especially for example one that may be moulded or extruded from the relevant material as an integral, unitary member/component, or alternatively cut or machined from the relevant sheet material.

In some such embodiment forms the first and second attachment (especially tab) portions of the or the respective interconnection member may be attachable to a respective connection site on the respective one of the first or second solar panel unit bodies by means of an elongate anchoring pin or rod (e.g. of metal or rigid plastics material) which passes through a terminal loop portion at a free end of the respective first or second attachment (especially tab) portion located distal from its connection to the central interconnection portion, and which anchoring pin or rod is anchorable to the respective one of the first or second solar panel unit bodies, especially to a respective peripheral border portion thereof.

In some alternative, and mechanical simpler, embodiment forms of interconnection member as the interconnection means, the or each interconnection member may take the form of, or may comprise, a web or sheet or panel (e.g. from about 2 or 3 or 5 up to about 8 or 10 or 12 mm thick) of resilient or flexible or resiliently flexible material (e.g. a urethane or polyurethane rubber, which again may include fibre-reinforced variants thereof), which itself constitutes an interconnection portion. In some such embodiment forms the or each such interconnection web or sheet or panel may be attachable to a respective connection site on the respective one of the first or second solar panel unit bodies by means of any suitable number of anchoring pins, studs, rivets, screws, bolts, clips or other fixing elements or any combination of any two or more of the aforesaid anchoring/fixing elements.

Some specific practical examples of various forms of such interconnection members, as well as pin/rod anchoring arrangements and anchoring/fixing elements where employed, will be described further hereinbelow, in connection with some specifically described example embodiments of the invention taken in conjunction with the accompanying drawings.

For interconnecting any given pair of adjacent solar panel bodies, any suitable number of interconnection members may be employed, either substantially singly in discrete locations or in one or two or more groups of e.g. 2, 3 or 4 like interconnection members located along a respective lateral side of the respective solar panel body but mutually spaced apart therealong by a short distance (e.g. by a mutual spacing distance of from about 1 or 2 or 3 or 5 up to about 8 or 10 or 15 or 20 or 25 or 30 cm, e.g. depending on the overall dimensions of the respective solar panel body).

In embodiments employing groups of interconnection members, each said group may be spaced apart from the other group(s) along the said respective lateral side of the respective solar panel unit. Furthermore, each said group of interconnection members may be located in an interconnection region intermediate between a median centre of the said respective lateral side of the respective solar panel body and a corner region thereof. In this manner, groups of interconnection members may be located more towards (although preferably not at or closely proximal to) the corner regions of adjacent solar panel units, rather than being located more in the vicinities of their median centres. Indeed, in some practical embodiments in which there are two groups of interconnection members per lateral side of each respective unit, each group of interconnection members may suitably be located around one-third of the way along a respective lateral side of the respective unit. These lateral positioning parameters may contribute to a more stable and secure overall connection between a given pair of solar panel unit bodies, especially in marine or other water-based environments where the surface of the water may not be uniform or stable. Alternatively or additionally, this feature may also usefully serve to enhance the flexibility and versatility, especially with regard to bending capability, of the or each interconnection between a given pair of solar panel units which is required to allow the pair of units to be pre-assembled together off-site e.g. in a folded-over, hinged or concertina-like fashion.

In other alternative embodiments it may be possible for only one interconnection region - and thus only one group of interconnection member(s) - to be provided on any given one side of a respective solar panel unit.

In view of the foregoing discussion of interconnection means that in some embodiments may be included for the purpose of interconnecting pairs of solar panel units according to the first aspect of the invention, according to a yet further aspect of the present invention there may independently be provided a solar panel unit comprising:
a body having an upper wall and a lower wall, and an internal volume located between the upper and lower walls such that the body is able to float on water when placed thereon, and
one or more photovoltaic modules mounted on an upper surface of the upper wall of the body,
wherein the body of the unit comprises at least one, optionally a plurality of, interconnection means for interconnecting the said unit to another, like solar panel unit, the or each interconnection means comprising an interconnection member, and the or each interconnection member being constructed and configured for attachment to both a first and a second said solar panel unit body, whereby the said first and second solar panel units are interconnectable via the said, or the said respective, interconnection member,
and wherein the or each interconnection member comprises a resilient or flexible or resiliently flexible interconnection portion.

In some embodiments of the preceding aspect, the interconnection portion of the or each interconnection member may be resiliently flexible in each of two opposite directions, whereby when attached to both of the first and second solar panel unit bodies it provides a two-way, or "push-pull", resiliently flexible connection therebetween.

Other preferred or optional features of the interconnection member(s) of the preceding aspect of the invention may be as defined and discussed above in connection with such features already introduced and defined in the context of embodiments of the first aspect of the invention.

Indeed, in some embodiments of the preceding aspect, at least one of the upper and lower walls of the body may be formed from a drawn, or deep-drawn, sheet material. Other preferred or optional features of the sheet material or of the solar panel body(ies) themselves may be as defined and discussed above in connection with such features already introduced and defined in the context of embodiments of the first aspect of the invention.

According to yet another aspect of the present invention there is provided a method of forming a solar panel array comprising a plurality of solar panel units according to the first aspect of the invention or any embodiment thereof, the method comprising:
providing a plurality of solar panel units, each being a solar panel unit according to the first aspect of the invention or any embodiment thereof;
providing one or more, or optionally a plurality of groups of, interconnection members each comprising a respective resilient or flexible or resiliently flexible interconnection portion; and
using said respective interconnection portion(s) of the respective said interconnection member(s), interconnecting the solar panel units of at least one pair thereof, optionally a plurality of pairs thereof, to form said solar panel array.

Other preferred or optional features of the interconnection member(s) used in interconnecting any given pair of solar panel units in forming embodiment solar panel arrays of the preceding aspect of the invention may be as defined and discussed above in connection with such features already introduced and defined in the context of embodiments of the first aspect of the invention.

According to yet another aspect of the present invention there is provided a method of generating electricity from sunlight using a solar panel unit of the first aspect of the invention or any embodiment thereof, or using a solar panel array of the preceding aspect or any embodiment thereof, the method comprising:
providing the said solar panel unit or solar panel array;
installing or deploying the said solar panel unit or solar panel array in or at a marine or other water-based location such that the or each said solar panel unit body floats on or adjacent a surface of the water; and
operating the or each said solar panel unit to generate and collect electricity therefrom upon incidence of sunlight on the or each photovoltaic module mounted on the upper surface of the upper wall of the or each said solar panel unit body.

Within the scope of this application it is expressly intended that the various aspects, embodiments, examples and alternatives set out in the preceding paragraphs, in the claims and/or in the following description and drawings, and in particular the individual features thereof, may be taken independently or in any combination. Thus, any one or more features referred to or described with reference to one particular embodiment should be construed as being applicable to any or all embodiments, unless expressly stated otherwise or such features are incompatible.

### BRIEF DESCRIPTION OF THE DRAWINGS

Various embodiments of the present invention in its various aspects will now be described in detail, by way of example only, with reference to the accompanying drawings, in which:
FIGURE 1 is a perspective view of a solar panel unit in accordance with one embodiment of the present invention;
FIGURE 2 is a close-up perspective view of a corner region of the solar panel unit of FIG. 1, showing in further detail one of the interconnection regions of the unit which allows plural such units to be interconnected together to form a solar panel array;
FIGURE 3 is a cut-away perspective view showing the internal dimpled/cupped structure of the solar panel unit body of the solar panel unit of FIGS. 1 & 2;
FIGURE 4(a) is a cross-sectional view of an edge region of a modified design of solar panel unit to that shown in FIGS. 1 & 2, showing one way in which the mounting of photovoltaic modules on the solar panel unit body is achieved by way of a special sealing arrangement;
FIGURE 4(b) is a cross-sectional view of an edge region of another modified design of solar panel unit to that shown in FIGS. 1 & 2, showing an alternative way in which the mounting of a newer design of photovoltaic modules on the solar panel unit body is achieved by way of a similar special sealing arrangement;
FIGURE 5 is a perspective view of a pair of solar panel units, each being a solar panel unit as shown in the embodiment of FIGS. 1 to 3 (or 4), showing one of the arrangements of interconnection members by which the adjacent solar panel units are interconnected;
FIGURE 6 is an enlarged view of the arrangement of interconnection members shown in FIG. 5;
FIGURE 7 is a simplified schematic plan view of an alternative embodiment of solar panel unit according to the invention, in which an alternative, somewhat simpler, form of resiliently flexible interconnection member is used as each interconnection means to interconnect adjacent unit bodies; and
FIGURE 8 is side sectional view of the peripheral border region of one of the unit bodies shown in FIG. 7, showing one example way of attaching the interconnection webs/sheet/panels to their respective connection sites on the solar panel unit bodies by means of a series of capacitance discharge weld studs and associated pop rivets.

### DETAILED DESCRIPTION OF EMBODIMENTS

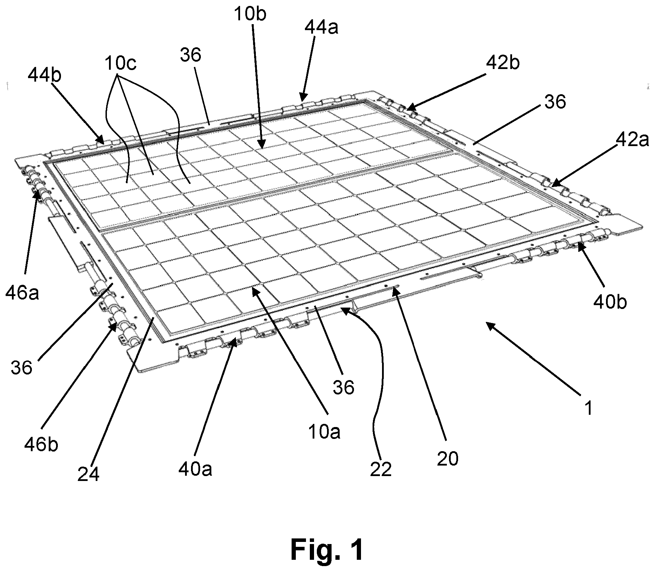

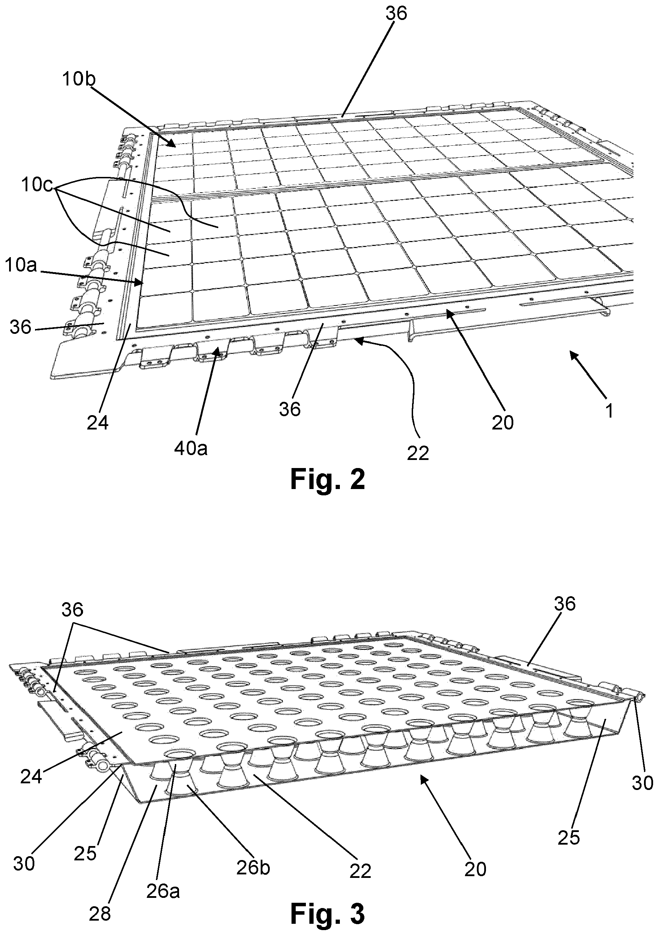

Referring firstly to FIGS. 1 and 2, here there is shown a solar panel unit 1 in accordance with one embodiment of the present invention. The unit 1 comprises a main floating body 20 having a generally square shape (in plan view) with a generally planar upper wall 24 and a generally planar lower wall 22, and an internal volume (or space or void) 28 (see FIG. 3) located between the upper 24 and lower 22 walls, the internal volume 28 being designed such that the body 1 is able to float on water when placed thereon. Mounted atop the body, especially by attachment using any convenient fixing or bonding means (e.g. an adhesive or other suitable bonding agent or composition), to an upper surface of the upper body wall 24, is a series-connected pair of photovoltaic modules (or "photovoltaic panels") 10a, 10b each comprising a plurality (e.g. 50, although other numbers are possible) of interconnected (e.g. series-interconnected) individual photovoltaic cells 10c. Although two such side-by-side photovoltaic modules 10a, 10b are shown mounted on the body upper wall 24, it is to be understood that other numbers of such photovoltaic modules per solar panel unit 1 may be used, e.g. depending on the overall dimensions of a typical photovoltaic module and the space available on the body upper wall 24. Each photovoltaic module 10a, 10b may of any conventional or known type used for the generation of electricity from sunlight, practical and commercially available examples of which are well known in the solar power art.

In the illustrated embodiment the photovoltaic modules 10a, 10b are mounted on a central portion or region of the upper body wall 24, where the modules 10a, 10b are in thermal contact with at least the planar portions of the upper body wall 24, so that any excess heat that may be generated by the photovoltaic modules 10a, 10b during use is conducted away from the modules 10a, 10b and into the body walls 24, 22 - and in many example instances further onwards into the water beneath the floating body 1 when in its deployed and in-use state and environment.

Each of the upper and lower walls 24, 22 of the body 20 is formed from a drawn or deep-drawn sheet material, especially sheet aluminium or aluminium alloy (e.g. an alloy of Al with Mg or other metal). Practical examples of suitable aluminium grades, as well as suitable aluminium alloys, are widely available in the art. By way of example, suitable thicknesses of the sheet material from which the upper and lower body walls 24, 22 are fabricated may be of the order of a few tenths of a millimetre up to a few millimetres, e.g. from about 0.2 or 0.3 or 0.4 or 0.5 mm up to about 1 or 1.5 or 2 or 2.5 or 3 or 4 or perhaps even up to about 5 or 6 or 7 or 8 or more) millimetres, although an optimum sheet material thickness may depend on the overall size of the body 20 and thus the required degree of strength and rigidity required of it. Also by way of example, a typical size of the body 20 may be of the order of around 2 metres x 2 metres square when viewed in plan, although a rectangular plan shape may be possible instead if so desired.

The upper and lower walls 24, 22 of the body 20 are each formed by a drawing - or more usually and more correctly, deep-drawing - technique, in which the basic as-manufactured sheet material is subjected to plastic deformation using a die or press, as a result of which the sheet material undergoes flow and/or stretching so as to assume the internal shape of the die or press and thus adopt a desired modified contoured shape as required of the finished deep-drawn body wall component 22, 24 of the solar panel unit 1. Such metal drawing techniques, and apparatuses for carrying out same, are already known for example in the automotive industry for the manufacture of vehicle body components and other specially shaped parts. The same or corresponding techniques, apparatuses and accessories (e.g. suitable lubricants to facilitate the sheet material's plastic flow), as well as suitable deep-drawing conditions of pressure, temperature, etc, will be readily known and usable in the practicing of embodiments of the present from the skilled person's knowledge of the deep-drawing art.

As seen more clearly in FIG. 3, the upper 24 and lower 22 body walls are joined around their peripheries by an obliquely angled bridging portion 25, which provides a peripheral border region 36 of the body 20 at which the respective peripheral border portions of the upper 24 and lower 22 body walls are bonded together by means of a watertight joint 30. Welding (e.g. roller welding) or other suitable fusion-based technique (such as soldering or brazing) may generally be used for this bonding, joint-forming purpose, although a suitable adhesive may be used instead, if so desired or appropriate.

FIG. 3 also shows an example of the internally dimpled/cupped structure of the interior volume 28 of the solar panel unit body 20 of the solar panel unit 1 of FIGS. 1 and 2.

Spread across the central region of each of the upper 24 and lower 22 body walls are a symmetrical or regular array of dimples or cup-like recesses 26a, 26b which extend and protrude into the internal volume 28 within the body 20. The dimples or cup-like recesses 26a, 26b are formed by local deformation or additional drawing/deep-drawing of the respective sheet material which forms the respective body walls, which is provided for by appropriate shaping of the die or press used to form the respective walls during their initial drawing/deep-drawing forming stage.

The array of dimples or cup-like recesses 26a, 26b in the body walls 22, 24 are mirror images of each other, so that individual dimples/recesses 26a, 26b extend mutually towards another inside the body 20's internal volume void/space 28. In the illustrated embodiment the mutually internally facing dimples/recesses 26a, 26b in each of the two body walls 22, 24 are of a sufficient depth such that they internally meet and abut each other in mutually facing pairs, their meeting occurring approximately midway between the two body walls 22, 24. The internal bases of each meeting/abutting pair of dimples/recesses 26a, 26b are bonded to one another by either a discrete welding step or by means of an adhesive during the body's assembly stage when the pre-formed upper and lower body walls 22, 24 are brought together and themselves mutually united or bonded together. This internal uniting/bonding of the internally meeting and abutting pairs of dimples/recesses 26a, 26b serves to enhance the structural rigidity, strength and overall integrity of the solar panel unit 1, as well as helping to stably support the photovoltaic modules 10a, 10b mounted on the body's upper wall 24.

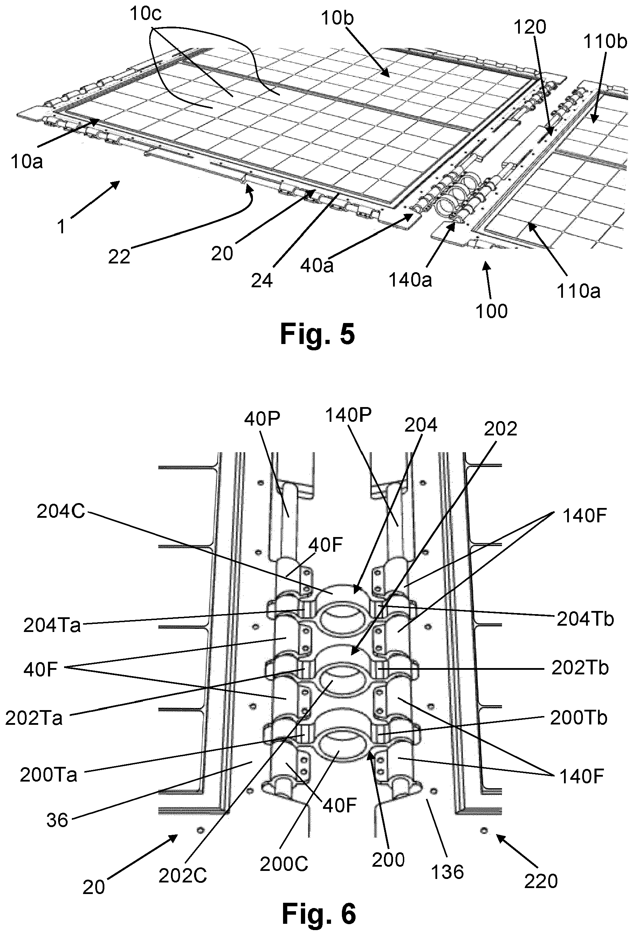

As shown in FIGS. 1 and 5, the flange-like peripheral border portions 36 of the body 20 at which the upper and lower body walls 24, 22 are welded or otherwise bonded together to form the finished body 20, additionally provide a series of interconnection regions 40a, 40b; 42a, 42b; 44a, 44b; 46a, 46b by which the solar panel unit 1 is interconnectable to at least one other, like solar panel unit 100, for the building up of a complete solar panel array comprising a plurality of like solar panel units. Each lateral side of the or the respective solar panel unit 1, 100 is provided with two such interconnection regions 40a, 40b or 42a, 42b or 44a, 44b or 46a, 46b, each interconnection region being spaced from the other on each lateral side of the unit, but positioned e.g. approximately midway between a median centre of the respective lateral side and a corner region thereof. In this manner each interconnection region is located more towards - although not at or closely proximal to - the corner regions of each lateral side of the unit 20, rather than being located more in the vicinities of their median centres. This helps to achieve a more stable and secure overall connection between any given pair of solar panel units 1, 100, especially in marine or other water-based environments where the surface of the water may not be uniform or stable. It also serves to enhance the flexibility and versatility, especially with regard to bending capability, of each interconnection between units, which is often important in instances where plural units are to be pre-assembled together off-site and transported to the deployment site in a folded-over, hinged or concertina-like fashion.

The peripheral border portions 36 of the body 20 may additionally provide, if desired or appropriate, a convenient location for the running, laying or fastening of any required wiring or cabling used to connect together the various photovoltaic modules 10a, 10b, and/or connecting the photovoltaic modules 10a, 10b; 110a, 110b [see FIG. 5] of adjacent solar panel units 1, 100 together and/or to an overall electricity collection, storage or distribution station or system.

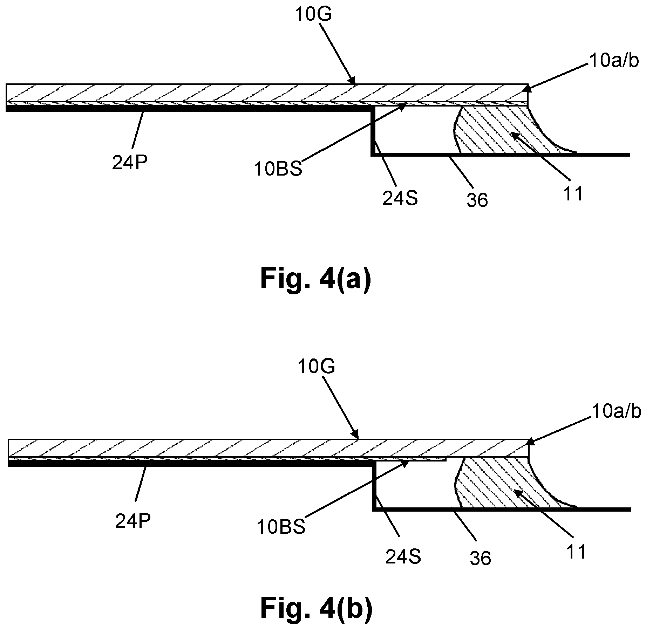

FIGS. 4(a) & 4(b) show two alternative ways in which the mounting of, respectively, a conventional or a newer design of photovoltaic modules 10a, 10b on the solar panel unit body 20 is achievable by way of a special sealing arrangement, which assists in maintaining the rear side of the photovoltaic modules 10a, 10b dry and to prevent or inhibit the ingress of water into any gap or space between them and the upper wall 24 of the unit body 20. As shown in both FIGS. 4(a) and 4(b), the slightly modified unit body 20 shown here includes an upper body wall 24 formed with a plateau portion 24P for carrying the respective photovoltaic module(s) 10a, 10b thereon, which plateau portion 24P has a raised profile or configuration relative to the peripheral border portion 36 of the unit body 20.

FIG. 4(a) illustrates the manner in which a peripheral sealing and bonding between a conventional photovoltaic module 10a or 10b and the peripheral border portion 36 of the unit body 20 is achieved by virtue of a strip or elongate body 11 of a suitable sealant and bonding material or composition, e.g. a silicone material (practical examples of which are well-known and widely available in the art). The peripheral silicone sealing and bonding strip or elongate body 11 is located to or on or adjacent an outer side of a stepped or ramped portion 24S of the body upper wall 24 which defines the plateau portion 24P on which the photovoltaic module 10a/b is mounted. Thus, an edge portion of the photovoltaic module 10a/b overhangs the stepped or ramped portion 24S of the body upper wall plateau portion 24P by a short distance, e.g. up to around 15 or 20 or 25 or 30 or 35 or 40 mm, which is sufficient to provide an elongate sealing and bonding site 11 extending around, especially substantially completely and continuously around, the periphery or edges of the solar panel unit between the overhanging portion(s) of the photovoltaic module 10a/b and the peripheral border portion 36 of the unit body 20. In this illustrated embodiment the photovoltaic module 10a/b is of a conventional design, namely one which comprises a plurality of interconnected individual photovoltaic cells sandwiched between one or more upper layers 10G (e.g. including at least a glass front panel layer 10G) and at least one rear supporting layer 10BS (e.g. including at least a rear protective layer 10BS of one or more synthetic polymer materials or a synthetic polymer laminate, e.g. comprising PVF (polyvinylfluoride) and/or PET (polyethylenterephthalate)), and in which the one or more upper layers 10G (especially an upper glass layer 10G) is of substantially the same facial dimensions and lateral extent (or lateral width) as the at least one rear supporting layer 10BS (especially a lower polymer laminate layer 10BS). Thus, the elongate sealing and bonding site 11 extending around, especially substantially completely and continuously around, the periphery or edges of the solar panel unit provides the sealing and bonding between the rear supporting layer 10BS of the overhanging portion of the photovoltaic module 10a/b and the peripheral border portion 36 of the unit body 20.

FIG. 4(b) illustrates the manner in which a peripheral sealing and bonding between a new design of photovoltaic module 10a or 10b and the peripheral border portion 36 of the unit body 20 is achieved by virtue of a similar strip or elongate body 11 of a suitable sealant and bonding material or composition, e.g. a silicone material (practical examples of which are well-known and widely available in the art). Again, as in the embodiment of FIG. 4(a), the peripheral silicone sealing and bonding strip or elongate body 11 is located to or on or adjacent an outer side of a stepped or ramped portion 24S of the body upper wall 24 which defines the plateau portion 24P on which the photovoltaic module 10a/b is mounted. Thus, an edge portion of the photovoltaic module 10a/b again overhangs the stepped or ramped portion 24S of the body upper wall plateau portion 24P by a short distance, e.g. up to around 15 or 20 or 25 or 30 or 35 or 40 mm, which is again sufficient to provide the elongate sealing and bonding site extending around, especially substantially completely and continuously around, the periphery or edges of the solar panel unit between the overhanging portion(s) of the photovoltaic module 10a/b and the peripheral border portion 36 of the unit body 20. However, in this embodiment shown in FIG. 4(b), the photovoltaic module 10a/b is of a new design, namely one which comprises a plurality of interconnected individual photovoltaic cells sandwiched between one or more upper layers 10G (e.g. including at least a glass front panel layer 10G) and at least one rear supporting layer 10BS (e.g. including at least a rear protective layer 10BS of one or more synthetic polymer materials or a synthetic polymer laminate, e.g. comprising PVF (polyvinylfluoride) and/or PET (polyethylenterephthalate)), but now in which the at least one rear supporting layer 10BS (especially a lower polymer laminate layer 10BS) is of truncated or foreshortened facial dimensions or a reduced lateral width or extent compared with the one or more upper layers 10G (especially an upper glass layer 10G) of the module 10a/b. Such truncated or foreshortened facial dimensions or a reduced lateral width or extent of the at least one rear supporting layer 10BS, compared with the overlying upper layer 10G, is for example up to around 10 or 15 or 20 mm on each lateral side of the solar panel unit. Thus, in this embodiment the aforementioned elongate sealing and bonding site 11 extending around, especially substantially completely and continuously around, the periphery or edges of the solar panel unit provides the sealing and bonding between the upper layer 10G itself, e.g. glass front panel 10G, of the overhanging portion of the photovoltaic module 10a/b and the peripheral border portion 36 of the unit body 20.

Returning to the embodiment as shown generally in FIG. 5 (corresponding to that of FIGS. 1 to 3) and in greater detail in FIG. 6, within each interconnection region 40a, 40b; 42a, 42b; 44a, 44b; 46a, 46b between adjacent or neighbouring solar panel units 1, 100, a series of e.g. three (or alternatively another number such as one, two or four) interconnection members 200, 202, 204 are provided, which together provide a resilient yet secure interconnection between the adjacent units 1, 100. The interconnection members 200, 202, 204 are spaced apart from each other a short distance, e.g. by a distance of a few centimetres (e.g. somewhere of the order of from about 1 or 2 or 3 up to about 10 or 15 or 20 cm (the spacing depending on the overall dimensions of the solar panel bodies 20, 220). Although three such interconnection members 200, 202, 204 are shown as being employed in this illustrated embodiment, it is to be understood that another number of such interconnection members, such as one only or perhaps two or even perhaps four, could be used instead, if so desired or appropriate. Each group of interconnection members 200, 202, 204 is located around one-third of the way along each respective lateral side of each respective unit 1, 100, so that each interconnection region between units is spaced from the respective corner regions of each unit - these lateral positioning parameters help contribute to a more stable and secure overall connection between a given pair of solar panel unit bodies.

Each interconnection member 200, 202, 204 comprises a unitary moulded or extruded or (or alternatively cut or machined) component which forms a resiliently flexible interconnection means by which the adjacent solar panels units 1, 100 are joined together. Each resiliently flexible interconnection member 200, 202, 204 is resiliently flexible in each of two opposite directions, whereby when attached to both of first (i.e. "1") and second (i.e. "100") solar panel unit bodies it provides a two-way, or "push-pull", resiliently flexible connection therebetween. This form of interconnection has an advantage that it leads to a more versatile, stable and secure connection between the two units 1, 100, especially in marine or other water-based environments where the surface of the water may not be uniform or stable and the ability for adjacent units to be able to pivot, hinge, pitch or yaw or mutually translate relative to one another by short distances (e.g. from a few (e.g. 1 to 5 or 10) millimetres up to a few or several (e.g. 2 or 3 or 5 up to 10 or 15 or 20) centimetres) may be especially desirable.

Each resiliently flexible interconnection member 200, 202, 204 thus enables adjacent solar panel units 1, 100, etc to be folded or hinged relative to each other, with higher plural numbers of such units being able to be folded into a concertina-like configuration during a pre-assembly stage (e.g. in a factory), in which state they can be brought to a desired deployment site and unfolded ready for installation.

Each interconnection member 200, 202, 204 comprises primarily a central toroidal or cylindrical body or ring 200C, 202C, 204C of resiliently flexible material, e.g. a urethane or polyurethane rubber or other elastomeric material, or a fibre-reinforced variant of any thereof (practical examples of all of which are well known and widely available in the art). Extending from diametrically opposite sides of each central body or ring 200C, 202C, 204C are a respective pair of tab portions 200Ta, 200Tb; 202Ta, 202Tb; 204Ta, 204Tb. These respective pairs of tab portions 200Ta, 200Tb; 202Ta, 202Tb; 204Ta, 204Tb are each attachable to a respective connection site on a respective peripheral border portion 36, 136 of the respective unit body 20, 220.

Each such connection site is formed as a U-shaped recess between respective ones of a respective series of protruding hollow cylindrical shoulders, lugs, sockets or double-flanges 40F, 140F extending outwardly from the respective peripheral border portion 36, 136 of the respective unit body 20, 220. A respective elongate anchoring pin or rod 40P, 140P, e.g. of metal (such as steel or other suitable metal, especially a metal that does not cause anodic corrosion of any metal of the unit body) or strong and rigid plastics material, passes through a respective terminal loop portion (as shown in the drawing) at a free end (distal from the respective central body or ring 200C, 202C, 204C) of each respective tab portion 200Ta, 200Tb; 202Ta, 202Tb; 204Ta, 204Tb of each group thereof on each respective side of the series of interconnection members 200, 202, 204. In this manner, all three interconnection members 200, 202, 204 are together anchored on each of their diametrically opposite sides to each of the first (i.e. "1") and second (i.e. "100") solar panel unit bodies via the respective series of interconnection shoulders, lugs or flanges 40F, 140F, with the single anchoring pin or rod 40P, 140P on each side anchoring all three interconnection members 200, 202, 204 simultaneously.

For forming the respective interconnections with the respective tab portions 200Ta, 200Tb; 202Ta, 202Tb; 204Ta, 204Tb, each elongate anchoring pin or rod 40P, 140P may be slid into and through the respective series of protruding hollow cylindrical shoulders, lugs, sockets or double-flanges 40F, 140F from their sides, and if desired or necessary it may be held in place therein by a suitable detent mechanism or e.g. a pin-operated or spring-loaded catch or other securing or locking device (not shown). Such a detent mechanism or catch or other securing or locking device may additionally facilitate withdrawal of the respective anchoring pin or rod 40P, 140P as or when needed, e.g. upon servicing or replacement or repair of any of the interconnection means components or upon decommissioning of the entire solar panel unit.

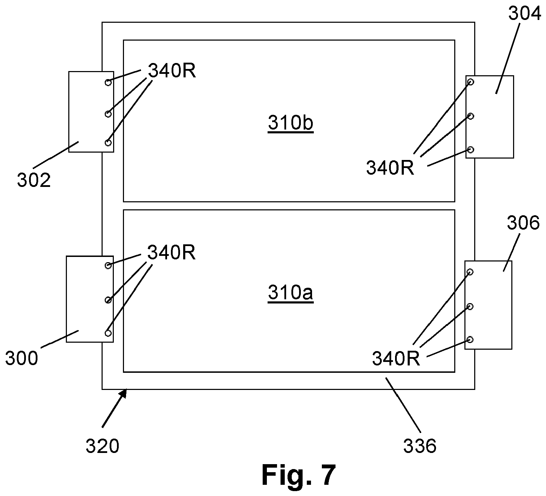

Turning to FIG. 7, here there is shown in a simplified schematic manner an alternative embodiment of solar panel unit according to the invention, in which an alternative, somewhat mechanically simpler, form of resiliently flexible interconnection member is used as each interconnection means to interconnect adjacent unit bodies 320.

In this alternative embodiment, the main unit body 320 still comprises the same pair of photovoltaic modules 310a, 310b mounted on the upper wall of the body 320, but now for the purpose of interconnecting adjacent solar panel units there are provided, located at corresponding various interconnection regions around the peripheral border region 336 of the unit, respective interconnection members 300, 302, 304, 306 each in the form of a web or sheet or panel (e.g. of the nature of a strap, flap or mat), such as from about 2 or 3 or 5 up to about 8 or 10 or 12 mm in thickness, of resilient or flexible or resiliently flexible material (again e.g. a urethane or polyurethane rubber, which again may include fibre-reinforced variants thereof). Each interconnection web or sheet or panel 300, 302, 304, 306 is attachable to a respective connection site on the respective one of the first or second solar panel unit bodies 320 by means of any suitable number and arrangement of e.g. metal anchoring pins, studs, rivets, screws or bolts 340R (or other like fixing elements), or any combination of any two or more of the aforesaid anchoring/fixing elements.

Such web- or sheet- or panel-like interconnection members 300, 302, 304, 306 may be mechanically simpler and cheaper and easier to manufacture and install for the purpose of interconnecting adjacent solar panel unit bodies 320, and may even serve to provide an improved degree and manner of bendability and foldability when adjacent solar panel unit bodies 320 are required to be folded over relative to one another in a concertina-like fashion.

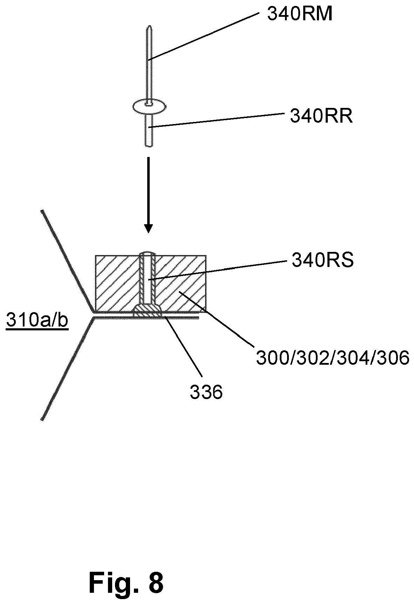

FIG. 8 illustrates one particularly useful way of attaching the interconnection webs/sheet/panels 300, 302, 304, 306 to their respective connection sites on the solar panel unit bodies 320 by means of a series or row, e.g. of 2, 3, 4, 5 or 6, capacitance discharge weld studs 340RS and associated pop (or other blind) rivets 340RR, the latter being fixed in place by means of a conventional mandrel or tool 340RM. The series/row of CD weld studs 340RS are affixed first to the relevant peripheral border region 336 of the unit, then the respective web- or sheet- or panel-like interconnection member 300/302/304/306 is placed thereover so that its appropriately positioned preformed holes therein are aligned with and accommodate the respective CD weld studs 340RS, and finally the respective pop (or other blind) rivets 340RR are affixed to their respective studs 340RS in a conventional fashion for such components, using the mandrel/tool 340RM, to secure the interconnection member 300/302/304/306 to the peripheral border region 336 of the unit.

As with all embodiments of the present invention, the floating solar panel units 1, 100, etc that may be built up into any sized and dimensioned floating solar panel array may be deployed in an especially efficient and cost-effective manner owing to their relatively simple and unique novel construction and configuration. In particular, solar panel units and arrays of units according to the invention may be deployed in various water-based floating environments, such as at sea, or in lakes, reservoirs or other bodies of water. If or as necessary, floating solar panels or solar arrays of the invention may be anchored at any desired location, e.g. using any suitable known anchoring means.

Typically the solar panel units to make up any given solar panel array - which for example may contain anywhere from a few tens up to a few hundred or even several thousand (or even into the millions of) individual solar panel units - will be pre-manufactured and pre-assembled at a factory or other off-site industrial location, that pre-assembly generally taking the form of the units being folded and/or stacked relative to each other in a concertina- or accordion-like fashion. In such format they may thus be readily packed and transported in e.g. standard 40-feet industrial containers, in which condition they may be shipped by e.g. non-specialist marine or river vessels directly to an installation location site e.g. with minimum on-land handling. Of course, they may be transported by land instead, if that is desired or appropriate.

Furthermore, because of the simple and unique novel construction and configuration of the solar panel units and solar arrays of the invention, the use of fewer components and moving parts compared with prior art systems renders embodiments of the present invention easier, quicker, less labour-intensive, cheaper and more efficient to assemble and deploy, and likewise they can be expected to be simpler and cheaper to maintain too. Also, many embodiments of the invention may be advantageous over known prior art floating solar panel systems, by virtue of the units' according to the present invention typically being of lower profile height than prior art floating systems, which not only means they are less visible from land (which may be desirable from the point of view of aesthetics and environmental visual impact), but they may be maintenanced or serviced from light marine or river vessels rather than from helicopters or large ships. The typically lower profile height may also be an advantage in terms of providing floating solar panel units with greater resistance to, or less propensity for experiencing, undesirable over-wash or in-water plunging under rough conditions, e.g. high winds or high weaves. This feature may be yet further advantageous in that is may enable service personnel to be able to actually walk on the tops of the solar panel units of any given array, which can lead to easier and safer, and thus also cheaper, operational maintenance.

It is to be understood that the above description of some specific embodiments of the invention in terms of their various features and aspects has been by way of non-limiting example(s) only, and various modifications may be made from what has been specifically described and illustrated whilst remaining within the scope of the invention as set out in the appended claims.

Throughout the description and claims of this specification, the words "comprise" and "contain" and linguistic variations of those words, for example "comprising" and "comprises", mean "including but not limited to", and are not intended to (and do not) exclude other moieties, additives, components, elements, integers or steps.

Throughout the description and claims of this specification, the singular encompasses the plural unless expressly stated otherwise or the context dictates otherwise. In particular, where the indefinite article is used, the specification is to be understood as contemplating plurality as well as singularity, unless expressly stated otherwise or the context dictates requires otherwise.

Furthermore, through this specification any feature, component, element, integer, characteristic, property, compound, chemical moiety or group described in conjunction with a particular aspect, embodiment or example of the invention is/are to be understood to be applicable to any other aspect, embodiment or example described herein unless incompatible therewith or expressly stated otherwise.

## Claims

1. A solar panel unit comprising:
a body having an upper wall and a lower wall, and an internal volume located between the upper and lower walls such that the body is able to float on water when placed thereon, and
one or more photovoltaic modules mounted on an upper surface of the upper wall of the body,
wherein at least one of, or optionally both of, the upper and lower walls of the body is formed from a drawn or deep-drawn sheet material,
and wherein the internal volume within the body is provided with a series or array of internal partitions, baffles, or other internal space-dividing or internal space-reducing elements, and one or both of the upper and/or lower walls of the body comprise(s) an array or series of dimples, depressions, indentations, recesses or other surface deformations which extend or protrude into the internal volume or space within the body to create said internal partitions, baffles, or other internal space-dividing or internal space-reducing elements.

2. A solar panel unit according to claim 1, wherein the material from which the upper body wall(s), and optionally also the lower body wall(s), is/are formed is a material with a thermal conductivity value of at least about 50 or 60 or 70 or 80 or 90 or 100 or 150 W/mK;
optionally wherein the material from which the upper and/or lower body walls are formed is a metal or a metal alloy, optionally aluminium or an aluminium alloy.

3. A solar panel unit according to claim 1 or claim 2, wherein the body of the solar panel unit is dimensioned so as to have a generally horizontal length and/or width which is/are at least about 2 or 3 or 4 or 5 or 6 or 7 or 8 or 9 or 10 or 12 or 15 or 20 or 30 or 40 or 50 times greater than its vertical height, the vertical height being defined by the spacing of the body's upper and lower walls.

4. A solar panel unit according to any preceding claim, wherein the upper and lower walls which define therebetween the internal volume of the body are each shaped so as to include a central portion and a peripheral border portion, especially a peripheral border portion that surrounds the respective central portion,
and wherein the central portion of at least the upper body wall, which is that wall which has the one or more photovoltaic modules mounted thereon, is formed as, or comprises, a plateau portion for carrying the respective photovoltaic module(s) thereon, which plateau portion has a raised profile or configuration relative to the peripheral border portion of the body's upper wall;
optionally wherein the central portion of at least the upper body wall, which is that wall which has the one or more photovoltaic modules mounted thereon, or at least a plateau portion thereof, is generally substantially planar, in order to facilitate the stable mounting of the photovoltaic module(s) thereon.

5. A solar panel unit according to claim 4, wherein the respective peripheral border portions of the upper and lower body walls include means by which, or site(s) at which, the upper and lower body walls are united or bonded together by means of a watertight joint to form the body,
and wherein the upper and lower body walls are united or bonded together by means of their respective peripheral border portions being welded or soldered or brazed together, or alternatively are adhered together by an adhesive;
optionally wherein the respective peripheral border portions of the upper and lower body walls via which the upper and lower body walls are united or bonded together to form the body additionally provide one or more locations or regions at which are provided interconnection means by which the unit is interconnectable to one or more adjacent like solar panel units.

6. A solar panel unit according to any preceding claim, wherein the internal volume within the body comprises one or more voids or spaces therewithin, so that the body of the unit is substantially or at least partially hollow, whereby the body is able to float on water when placed thereon;
optionally wherein either:
(i) the one or more voids or spaces contain air or other gas or mixture of gases; or
(ii) the one or more voids or spaces contain a foamed or porous material.

7. A solar panel unit according to any preceding claim, wherein both of the upper and lower body walls each comprise its own respective array or series of dimples, depressions, indentations, recesses or other surface deformations formed therein, and the pattern or arrangement of the arrays or series of surface deformations is substantially the same or symmetrical relative to each another in each of the wall sheets, whereby respective ones of the dimples, depressions, indentations, recesses or other surface deformations formed in one of the upper and lower wall sheets substantially match and extend or protrude inwardly into the internal volume or space within the body towards respective ones of the dimples, depressions, indentations, recesses or other surface deformations formed in the other of the upper and lower wall sheets;
optionally wherein the mutually internally facing dimples, depressions, indentations, recesses or other surface deformations in each of the two wall sheets are of a sufficient depth such that they internally meet or touch or abut each other, optionally in mutually facing pairs thereof, within the internal volume of the body, and the thus internally meeting, touching or abutting pairs of dimples, depressions, indentations, recesses or other surface deformations are united or bonded to one another by welding or an adhesive.

8. A solar panel unit according to any preceding claim, wherein the or each photovoltaic module mounted on the upper surface of the upper wall of the body is so mounted such that it is in thermal contact with the material of at least one or more portions of the body upper wall, optionally the material of at least some portions of the body upper wall.

9. A solar panel unit according to any preceding claim, wherein there is provided a layer, strip or volume of a desiccant material between, or in a space between, the or each photovoltaic module and the upper surface of the upper wall of the body on which it is mounted.

10. A solar panel unit according to any preceding claim, wherein the or each photovoltaic module mounted on the upper surface of the upper wall of the body, optionally on an upper central or plateau portion thereof, is mounted thereon with the assistance or inclusion of sealing means, optionally peripheral sealing means,
and wherein the or each photovoltaic module is mounted on the upper surface of the upper wall of the body by virtue of being bonded thereto at least along one or more peripheral or edge portions or regions of the solar panel unit by virtue of bonding means which additionally serve as sealing means;
optionally (i) wherein the peripheral sealing and/or bonding means comprises a strip or elongate body of a sealant and/or bonding material or composition;
and further optionally (ii) wherein the peripheral sealing and/or bonding means comprises a strip or elongate body of a sealant and/or bonding material or composition, and the peripheral sealing and/or bonding strip or elongate body of the sealant and/or bonding material/composition is provided or located to or on or adjacent an outer side of a stepped or ramped portion of the upper wall of the unit body which defines a plateau portion thereof on which the respective photovoltaic module(s) is/are mounted.

11. A solar panel unit according to claim 10, wherein (ii) is present or satisfied and one or more portions of the or each photovoltaic module overhangs the stepped or ramped portion of the upper wall plateau portion of the unit body by a short distance of up to around 15 or 20 or 25 or 30 or 35 or 40 mm, whereby an elongate sealing and/or bonding site is provided which extends around, optionally substantially completely and continuously around, the periphery or edges of the solar panel unit between the overhanging portion(s) of the or each photovoltaic module and a peripheral border portion of the unit body;
optionally wherein one of the following (iii) or (iv) is present or satisfied:
(iii) wherein the or each photovoltaic module comprises a plurality of interconnected individual photovoltaic cells sandwiched between one or more upper layers and at least one rear supporting layer, and the one or more upper layers is/are of substantially the same facial dimensions and lateral extent or lateral width as the at least one rear supporting layer, and wherein the elongate sealing and/or bonding site extending around, optionally substantially completely and continuously around, the periphery or edges of the solar panel unit thereby provides the said sealing and/or bonding between the at least one rear supporting layer of the overhanging portion(s) of the or each photovoltaic module and a peripheral border portion of the unit body; or
(iv) wherein the or each photovoltaic module comprises a plurality of interconnected individual photovoltaic cells sandwiched between one or more upper layers and at least one rear supporting layer, and the at least one rear supporting layer is of truncated or foreshortened facial dimensions or a reduced lateral width or extent compared with the one or more upper layers of the or each module, and wherein the elongate sealing and/or bonding site extending around, optionally substantially completely and continuously around, the periphery or edges of the solar panel unit thereby provides the said sealing and/or bonding between the upper layer of the overhanging portion(s) of the or each photovoltaic module and a peripheral border portion of the unit body.

12. A solar panel unit according to any preceding claim, further comprising at least one, optionally a plurality of, interconnection means for interconnecting the said unit to another, like solar panel unit also independently in accordance with any preceding claim,
and wherein the or each interconnection means comprises an interconnection member, the or each interconnection member being constructed and configured for attachment to both a first and a second said solar panel unit body, whereby the said first and second solar panel units are interconnectable via the said, or the said respective, interconnection member;
optionally wherein the or each interconnection member comprises a resilient or flexible or resiliently flexible interconnection portion which is resiliently flexible in each of two opposite directions, whereby when attached to both of the first and second solar panel unit bodies it provides a two-way, or "push-pull", resiliently flexible connection therebetween;
and further optionally wherein the or each interconnection member takes the form of, or comprises, a web or sheet or panel of resilient or flexible or resiliently flexible material, optionally wherein the or each interconnection web or sheet or panel is attachable to a respective connection site on the respective one of the first or second solar panel unit bodies by means of a number of anchoring pins, studs, rivets, screws, bolts, clips or other fixing elements or any combination of any two or more of the aforesaid anchoring/fixing elements.

13. A method of making a body for use in a solar panel unit, the body being for use in carrying one or more photovoltaic modules of the unit, wherein the body comprises an upper wall and a lower wall, and an internal volume located between the upper and lower walls such that the body is able to float on water when placed thereon,
wherein the method comprises forming at least one of the upper and lower walls of the body by drawing or deep-drawing it from sheet material;
and wherein the method further comprises mounting on an upper surface of the upper wall of the body the one or more photovoltaic modules;
and further wherein the method further comprises forming one or both of the upper and/or lower walls of the body with an array or series of dimples, depressions, indentations, recesses or other surface deformations which extend or protrude into the internal volume or space within the body so as to create therein a series or array of internal partitions, baffles, or other internal space-dividing or internal space-reducing elements.

14. A solar panel array comprising a plurality of solar panel units, each solar panel unit being a solar panel unit according to any one of claims 1 to 12.

15. A kit or set of component parts comprising a plurality of solar panel units each being a solar panel unit according to any one of claims 1 to 12, wherein pairs of said solar panel units are interconnectable together to form a solar panel array according to claim 14;
optionally wherein the kit or set further includes a plurality of interconnection members as defined in claim 12.

16. A method of forming a solar panel array comprising a plurality of solar panel units each being a solar panel unit according to any one of claims 1 to 12, the method comprising:
providing the said plurality of the said solar panel units;
providing one or more, or optionally a plurality of groups of, interconnection members each comprising a respective resilient or flexible or resiliently flexible interconnection portion; and
using said respective interconnection portion(s) of the respective said interconnection member(s), interconnecting the solar panel units of at least one pair thereof, optionally a plurality of pairs thereof, to form said solar panel array.

17. A method of generating electricity from sunlight using a solar panel unit according to any one of claims 1 to 12, or using a solar panel array according to claim 14, the method comprising:
providing the said solar panel unit or solar panel array;
installing or deploying the said solar panel unit or solar panel array in or at a marine or other water-based location such that the or each said solar panel unit body floats on or adjacent a surface of the water; and
operating the or each said solar panel unit to generate and collect electricity therefrom upon incidence of sunlight on the or each photovoltaic module mounted on the upper surface of the upper wall of the or each said solar panel unit body.

## Patentansprüche

1. Eine Solarpaneleinheit, die Folgendes umfasst:
einen Körper mit einer oberen Wand und einer unteren Wand und einem Innenvolumen, das sich zwischen der oberen und der unteren Wand befindet, so dass der Körper auf dem Wasser schwimmen kann, wenn er darauf platziert wird, und
ein oder mehrere Photovoltaikmodule, die an einer oberen Fläche der oberen Wand des Körpers angebracht sind,
wobei mindestens eine oder optional beide der oberen und unteren Wände des Körpers aus einem Ziehblech oder Tiefziehblech gebildet ist,
und wobei das innere Volumen innerhalb des Körpers mit einer Reihe oder Anordnung von inneren Trennwänden, Abschirmungen oder anderen inneren raumteilenden oder inneren raumverringernden Elementen versehen ist und eine oder beide der oberen und/oder unteren Wände des Körpers eine Anordnung oder Reihe von Grübchen, Vertiefungen, Einkerbungen, Aussparungen oder anderen Oberflächenverformungen aufweisen, die sich in das innere Volumen oder den Raum innerhalb des Körpers erstrecken oder hineinragen, um die inneren Trennwände, Abschirmungen oder andere innere raumteilende oder innere raumverringernde Elemente zu bilden.

2. Eine Solarpaneleinheit nach Anspruch 1, wobei das Material, aus dem die obere(n) Körperwand(e) und optional auch die untere(n) Körperwand(e) gebildet ist/sind, ein Material mit einem Wärmeleitfähigkeitswert von mindestens etwa 50 oder 60 oder 70 oder 80 oder 90 oder 100 oder 150 W/mK ist;
wobei es sich bei dem Material, aus dem die obere und/oder untere Körperwand gebildet ist, optional um ein Metall oder eine Metalllegierung, optional um Aluminium oder eine Aluminiumlegierung, handelt.

3. Eine Solarpaneleinheit nach Anspruch 1 oder Anspruch 2, wobei der Körper der Solarpaneleinheit so dimensioniert ist, dass er eine im Allgemeinen horizontale Länge und/oder Breite aufweist, die mindestens etwa 2 oder 3 oder 4 oder 5 oder 6 oder 7 oder 8 oder 9 oder 10 oder 12 oder 15 oder 20 oder 30 oder 40 oder 50 mal größer ist als seine vertikale Höhe, wobei die vertikale Höhe durch den Abstand der oberen und unteren Wände des Körpers definiert ist.

4. Eine Solarpaneleinheit nach einem der vorhergehenden Ansprüche, wobei die obere und die untere Wand, die zwischen sich das Innenvolumen des Körpers begrenzen, jeweils so geformt sind, dass sie einen zentralen Teil und einen peripheren Randteil umfassen, insbesondere einen peripheren Randteil, der den jeweiligen zentralen Teil umgibt,
und wobei der zentrale Abschnitt zumindest der oberen Körperwand, die die Wand ist, an der das eine oder die mehreren Photovoltaikmodule angebracht sind, als Plateauabschnitt ausgebildet ist oder einen solchen umfasst, um das/die jeweilige(n) Photovoltaikmodul(e) darauf zu tragen, wobei der Plateauabschnitt ein erhöhtes Profil oder eine erhöhte Konfiguration in Bezug auf den peripheren Randabschnitt der oberen Wand des Körpers aufweist;
optional, wobei der zentrale Teil mindestens der oberen Körperwand, d.h. der Wand, an der das oder die Photovoltaikmodul(e) angebracht ist/sind, oder mindestens ein Plateauabschnitt davon im Allgemeinen eben ist, um die stabile Anbringung des oder der Photovoltaikmodul(e) daran zu vereinfachen.

5. Eine Solarpaneleinheit nach Anspruch 4, wobei die jeweiligen peripheren Randabschnitte der oberen und unteren Körperwände Mittel oder Stellen aufweisen, an denen die oberen und unteren Körperwände mittels einer wasserdichten Verbindung zusammengefügt oder miteinander verbunden sind, um den Körper zu bilden,
und wobei die obere und die untere Körperwand durch ihre jeweiligen peripheren Randabschnitte, die miteinander verschweißt, verlötet oder hartverlötet sind, zusammengefügt oder miteinander verbunden sind oder alternativ durch einen Klebstoff zusammengeklebt sind;
optional, wobei die jeweiligen peripheren Randabschnitte der oberen und unteren Körperwände, über die die oberen und unteren Körperwände zur Bildung des Körpers zusammengefügt oder miteinander verbunden sind, zusätzlich eine oder mehrere Stellen oder Bereiche bereitstellen, an denen Verbindungsmittel vorgesehen sind, durch die die Einheit mit einer oder mehreren benachbarten gleichartigen Solarpaneleinheiten verbindbar ist.

6. Eine Solarpaneleinheit nach einem der vorhergehenden Ansprüche, wobei das Innenvolumen innerhalb des Körpers einen oder mehrere Hohlräume oder Räume aufweist, so dass der Körper der Einheit im Wesentlichen oder zumindest teilweise hohl ist, wodurch der Körper auf dem Wasser schwimmen kann, wenn er darauf platziert wird;
optional, wobei entweder:
(i) der eine oder die mehreren Hohlräume Luft oder ein anderes Gas oder Gasgemisch enthalten; oder
(ii) der eine oder die mehreren Hohlräume oder Räume ein geschäumtes oder poröses Material enthalten.

7. Eine Solarpaneleinheit nach einem der vorhergehenden Ansprüche, wobei sowohl die obere als auch die untere Körperwand jeweils ihre eigene Anordnung oder Reihe von Grübchen, Vertiefungen, Einbuchtungen, Aussparungen oder anderen darin ausgebildeten Oberflächenverformungen aufweisen und das Muster oder die Anordnung oder Reihen von Oberflächenverformungen im Wesentlichen gleich oder symmetrisch zueinander in jeder der Wandplatten ist, wobei die jeweiligen Grübchen, Vertiefungen, Einbuchtungen, Aussparungen oder andere Oberflächenverformungen, die in einer der oberen und unteren Wandplatten ausgebildet sind, im Wesentlichen übereinstimmen und sich nach innen in das innere Volumen oder den Raum innerhalb des Körpers in Richtung der jeweiligen Grübchen, Vertiefungen, Einbuchtungen, Aussparungen oder anderen Oberflächenverformungen erstrecken oder vorstehen, die in der anderen der oberen und unteren Wandplatte ausgebildet sind;
wobei die einander zugewandten Grübchen, Vertiefungen, Einbuchtungen, Aussparungen oder anderen Oberflächenverformungen in jeder der beiden Wandplatten eine ausreichende Tiefe aufweisen, so dass sie sich im Inneren des Innenvolumens des Körpers treffen oder berühren oder aneinander stoßen, gegebenenfalls in einander zugewandten Paaren, und die sich so im Inneren treffenden, berührenden oder aneinander stoßenden Paare von Grübchen, Vertiefungen, Einbuchtungen, Aussparungen oder anderen Oberflächenverformungen durch Schweißen oder einen Klebstoff miteinander verbunden oder verklebt sind.

8. Eine Solarpaneleinheit nach einem der vorhergehenden Ansprüche, wobei das oder jedes Photovoltaikmodul, das auf der oberen Fläche der oberen Wand des Körpers angebracht ist, so angebracht ist, dass es in thermischem Kontakt mit dem Material von mindestens einem oder mehreren Abschnitten der oberen Wand des Körpers steht, optional mit dem Material von mindestens einigen Abschnitten der oberen Wand des Körpers.

9. Eine Solarpaneleinheit nach einem der vorhergehenden Ansprüche, wobei eine Schicht, ein Streifen oder ein Volumen eines Trockenmittels zwischen oder in einem Zwischenraum zwischen dem oder jedem Photovoltaikmodul und der oberen Oberfläche der oberen Wand des Körpers, an dem es befestigt ist, vorgesehen ist.

10. Eine Solarpaneleinheit nach einem der vorhergehenden Ansprüche, wobei das oder jedes Photovoltaikmodul, das auf der oberen Oberfläche der oberen Wand des Körpers, optional auf einem oberen zentralen oder plateauartigen Abschnitt davon, montiert ist, mit Hilfe oder unter Einbeziehung von Dichtungsmitteln, optional peripheren Dichtungsmitteln, darauf montiert ist,
und wobei das oder jedes Photovoltaikmodul an der oberen Oberfläche der oberen Wand des Körpers dadurch befestigt ist, dass es zumindest entlang eines oder mehrerer peripheren Abschnitte oder Kantenabschnitte oder -bereiche der Solarpaneleinheit mit Hilfe von Klebemitteln, die zusätzlich als Dichtungsmittel dienen, mit dieser verbunden ist;
optional (i) wobei das periphere Abdichtungs- und/oder Klebemittel einen Streifen oder länglichen Körper aus einem Dichtungs- und/oder Klebematerial oder einer Zusammensetzung umfasst;
und ferner optional (ii), wobei das periphere Abdichtungs- und/oder Verbindungsmittel einen Streifen oder länglichen Körper aus einem Abdichtungs- und/oder Verbindungsmaterial oder einer -zusammensetzung umfasst und der periphere Abdichtungs- und/oder Verbindungsstreifen oder längliche Körper aus dem Abdichtungs- und/oder Verbindungsmaterial/-zusammensetzung an oder auf oder neben einer Außenseite eines abgestuften oder abgeschrägten Abschnitts der oberen Wand des Einheitskörpers vorgesehen oder angeordnet ist, der einen Plateauabschnitt davon definiert, auf dem das/die jeweilige(n) Photovoltaikmodul(e) montiert ist/sind.

11. Eine Solarpaneleinheit nach Anspruch 10, wobei (ii) vorhanden oder erfüllt ist und ein oder mehrere Abschnitte des oder jedes Photovoltaikmoduls den abgestuften oder abgeschrägten Abschnitt des Plateauabschnitts der oberen Wand des Einheitskörpers um einen kurzen Abstand von bis zu etwa 15 oder 20 oder 25 oder 30 oder 35 oder 40 mm überragen, wobei eine längliche Abdichtungs- und/oder Verbindungsstelle vorgesehen ist, die sich um den Umfang oder die Ränder der Solarmoduleinheit zwischen dem(den) überhängenden Abschnitt(en) des oder jedes Photovoltaikmoduls und einem peripheren Randabschnitt des Einheitskörpers erstreckt, optional im Wesentlichen vollständig und kontinuierlich;
wobei optional eine der folgenden Bedingungen (iii) oder (iv) erfüllt ist:
(iii) wobei das oder jedes Photovoltaikmodul eine Vielzahl von miteinander verbundenen einzelnen Photovoltaikzellen umfasst, die zwischen einer oder mehreren oberen Schichten und mindestens einer hinteren Trägerschicht angeordnet sind, und die eine oder mehreren oberen Schichten im Wesentlichen dieselben Gesichtsabmessungen und dieselbe seitliche Ausdehnung oder seitliche Breite wie die mindestens eine hintere Trägerschicht aufweist/aufweisen, und wobei die längliche Abdichtungs- und/oder Verbindungsstelle, die sich um den Umfang oder die Kanten der Solarmoduleinheit herum, optional im Wesentlichen vollständig und kontinuierlich, erstreckt, dadurch die besagte Abdichtung und/oder Verbindung zwischen der mindestens einen hinteren Trägerschicht des überhängenden Abschnitts (der überhängenden Abschnitte) des oder jedes Photovoltaikmoduls und einem peripheren Randabschnitt des Einheitskörpers bereitstellt; oder
(iv) wobei das oder jedes Photovoltaikmodul eine Vielzahl von miteinander verbundenen einzelnen Photovoltaikzellen umfasst, die zwischen einer oder mehreren oberen Schichten und mindestens einer hinteren Trägerschicht angeordnet sind, und die mindestens eine hintere Trägerschicht im Vergleich zu der einen oder den mehreren oberen Schichten des oder jedes Moduls abgeschnittene oder verkürzte Gesichtsabmessungen oder eine verringerte seitliche Breite oder Ausdehnung aufweist, , und wobei die längliche Abdichtungs- und/oder Verbindungsstelle, die sich um den Umfang oder die Kanten der Solarmoduleinheit herum, optional im Wesentlichen vollständig und kontinuierlich, erstreckt, dadurch die besagte Abdichtung und/oder Verbindung zwischen der mindestens einen hinteren Trägerschicht des überhängenden Abschnitts (der überhängenden Abschnitte) des oder jedes Photovoltaikmoduls und einem peripheren Randabschnitt des Einheitskörpers bereitstellt; oder

12. Eine Solarpaneleinheit nach einem der vorangehenden Ansprüche, die ferner mindestens eine, gegebenenfalls mehrere, Verbindungsmittel zum Verbinden der Einheit mit einer anderen, gleichartigen Solarpaneleinheit ebenfalls unabhängig nach einem der vorangehenden Ansprüche umfasst,
und wobei das oder jedes Verbindungsmittel ein Verbindungselement umfasst, wobei das oder jedes Verbindungselement so konstruiert und konfiguriert ist, dass es sowohl an einem ersten als auch an einem zweiten Körper der Solarpaneleinheit befestigt werden kann, wodurch die erste und die zweite Solarpaneleinheit über das oder das jeweilige Verbindungselement miteinander verbunden werden können;
wobei das oder jedes Verbindungselement optional einen elastischen oder flexiblen oder elastisch flexiblen Verbindungsabschnitt umfasst, der in jeder der beiden entgegengesetzten Richtungen elastisch flexibel ist, wodurch es, wenn es sowohl am ersten als auch am zweiten Körper der Solarpaneleinheit angebracht ist, eine elastisch flexible Zweiwege- oder "Push-Pull"-Verbindung dazwischen bereitstellt;
und ferner optional, wobei das oder jedes Verbindungselement die Form einer Bahn oder eines Blattes oder einer Platte aus elastischem oder flexiblem oder elastisch flexiblem Material annimmt oder umfasst, optional, wobei die oder jede Verbindungsbahn oder Blatt oder Platte an einer jeweiligen Verbindungsstelle an dem jeweiligen Körper der ersten oder zweiten Solarpaneleinheit mittels einer Anzahl von Verankerungsstiften, Zapfen, Nieten, Schrauben, Bolzen, Clips oder anderen Befestigungselementen oder einer beliebigen Kombination von zwei oder mehreren der vorgenannten Verankerungs-/Befestigungselemente befestigbar ist.

13. Ein Verfahren zur Herstellung eines Körpers zur Verwendung in einer Solarpaneleinheit, wobei der Körper zum Tragen eines oder mehrerer Photovoltaikmodule der Einheit dient, wobei der Körper eine obere Wand und eine untere Wand und ein Innenvolumen umfasst, das sich zwischen der oberen und der unteren Wand befindet, so dass der Körper auf dem Wasser schwimmen kann, wenn er darauf platziert wird,
wobei das Verfahren das Ausbilden mindestens einer der oberen und unteren Wände des Körpers durch Ziehen oder Tiefziehen aus Blechmaterial umfasst;
und wobei das Verfahren ferner das Anbringen des einen oder der mehreren Photovoltaikmodule an einer oberen Fläche der oberen Wand des Körpers umfasst;
und wobei das Verfahren ferner das Formen der einen oder der beiden der oberen und/oder unteren Wände des Körpers mit einer Anordnung oder Reihe von Grübchen, Vertiefungen, Einkerbungen, Aussparungen oder anderen Oberflächenverformungen umfasst, die sich in das innere Volumen oder den Raum innerhalb des Körpers erstrecken oder hineinragen, um eine Reihe oder Anordnung von inneren Trennwänden, Abschirmungen oder anderen inneren raumteilenden oder inneren raumverringernden Elementen zu bilden.

14. Eine Solarpanelanordnung mit einer Vielzahl von Solarpaneleinheiten, wobei jede Solarpaneleinheit eine Solarpaneleinheit nach einem der Ansprüche 1 bis 12 ist.

15. Ein Bausatz oder Satz von Bauteilen, der eine Vielzahl von Solarpaneleinheiten umfasst, von denen jede eine Solarpaneleinheit nach einem der Ansprüche 1 bis 12 ist, wobei Paare der Solarpaneleinheitenmiteinander verbunden werden können, um eine Solarpanelanordnung nach Anspruch 14 zu bilden;
optional, wobei der Bausatz oder das Set außerdem eine Vielzahl von Verbindungselementen gemäß Anspruch 12 enthält.

16. Ein Verfahren zur Bildung einer Solarpanelanordnung, die eine Vielzahl von Solarpaneleinheiten umfasst, die jeweils eine Solarpaneleinheit nach einem der Ansprüche 1 bis 12 sind, wobei das Verfahren Folgendes umfasst:
Bereitstellen der genannten Vielzahl von Solarpaneleinheiten;
Bereitstellen eines oder mehrerer oder optional einer Vielzahl von Gruppen von Verbindungselementen, die jeweils einen elastischen oder flexiblen oder elastisch flexiblen Verbindungsabschnitt umfassen; und
Verwenden des/der jeweiligen Verbindungsabschnitts/-abschnitte des/der jeweiligen Verbindungselements/-elemente, Verbinden der Solarpaneleinheiten von mindestens einem Paar davon, optional einer Vielzahl von Paaren davon, um die Solarpanelanordnung zu bilden.

17. Ein Verfahren zur Erzeugung von Elektrizität aus Sonnenlicht unter Verwendung einer Solarpaneleinheit nach einem der Ansprüche 1 bis 12 oder unter Verwendung einer Solarpanelanordnung nach Anspruch 14, wobei das Verfahren Folgendes umfasst:
Bereitstellen der Solarpaneleinheit oder der Solarpanelanordnung;
Installieren oder Ausbringen der Solarmoduleinheit oder der Solarpanelanordnung in oder an einem maritimen oder anderen wasserbasierten Ort, so dass der Körper der Solarmoduleinheit oder jeder Körper der Solarmoduleinheit auf oder neben einer Wasseroberfläche schwimmt; und
Betreiben der oder jeder Solarpaneleinheit, um bei Einfall von Sonnenlicht auf das oder jedes Photovoltaikmodul, das auf der oberen Fläche der oberen Wand des Körpers der oder jeder Solarpaneleinheit angebracht ist, Strom zu erzeugen und zu speichern.

## Revendications

1. Unité de panneau solaire comprenant:
un corps ayant une paroi supérieure et une paroi inférieure, et un volume interne situé entre les parois supérieure et inférieure de sorte que le corps peut flotter sur l'eau lorsqu'il est placé dessus, et
un ou plusieurs modules photovoltaïques montés sur une surface supérieure de la paroi supérieure du corps,
dans laquelle au moins l'une des parois supérieure et inférieure du corps, ou éventuellement les deux, est formée à partir d'un matériau en feuille étiré ou embouti,
et dans laquelle le volume interne à l'intérieur du corps est pourvu d'une série ou d'un réseau de cloisons, de chicanes internes ou d'autres éléments internes de division d'espace ou de réduction d'espace interne, et l'une ou les deux des parois supérieure et/ou inférieure du corps comprend/comprennent un réseau ou une série de fossettes, de dépressions, d'indentations, d'évidements ou d'autres déformations de surface qui s'étendent ou font saillie dans le volume ou l'espace interne à l'intérieur du corps pour créer lesdites cloisons, chicanes internes ou autres éléments internes de séparation d'espace ou de réduction d'espace interne.

2. Unité de panneau solaire selon la revendication 1, dans laquelle le matériau à partir duquel la ou les parois supérieures du corps, et éventuellement également la ou les parois inférieures de corps, est/sont formée(s) est un matériau présentant une valeur de conductivité thermique d'au moins environ 50 ou 60 ou 70 ou 80 ou 90 ou 100 ou 150 W/mK;
éventuellement dans laquelle le matériau à partir duquel les parois supérieure et/ou inférieure de corps sont formées est un métal ou un alliage métallique, éventuellement de l'aluminium ou un alliage d'aluminium.

3. Unité de panneau solaire selon la revendication 1 ou la revendication 2, dans laquelle le corps de l'unité de panneau solaire est dimensionné de manière à avoir une longueur et/ou une largeur généralement horizontale qui est/sont au moins environ 2 ou 3 ou 4 ou 5 ou 6 ou 7 ou 8 ou 9 ou 10 ou 12 ou 15 ou 20 ou 30 ou 40 ou 50 fois supérieure à sa hauteur verticale, la hauteur verticale étant définie par l'espacement des parois supérieure et inférieure du corps.

4. Unité de panneau solaire selon une quelconque revendication précédente, dans laquelle les parois supérieure et inférieure qui définissent entre elles le volume interne du corps sont chacune formées de manière à inclure une partie centrale et une partie de bordure périphérique, en particulier une partie de bordure périphérique qui entoure la partie centrale respective,
et dans laquelle la partie centrale d'au moins la paroi supérieure de corps, qui est la paroi sur laquelle sont montés le(s) module(s) photovoltaïque(s), est formée comme, ou comprend, une partie plateau pour porter le(s) module(s) photovoltaïque(s) respectif(s) dessus, laquelle partie plateau présente un profil ou une configuration surélevée par rapport à la partie de bordure périphérique de la paroi supérieure de corps;
éventuellement dans laquelle la partie centrale d'au moins la paroi supérieure de corps, qui est la paroi sur laquelle sont montés l'un ou les plusieurs modules photovoltaïques, ou au moins une partie plateau de ceux-ci, est généralement sensiblement plane, afin de faciliter le montage stable du/des module(s) photovoltaïque(s) dessus.

5. Unité de panneau solaire selon la revendication 4, dans laquelle les parties de bordure périphériques respectives des parois supérieures et inférieures de corps comprennent des moyens par lesquels, ou un ou des sites au niveau desquels, les parois supérieure et inférieure de corps sont unies ou liées ensemble au moyen d'un joint étanche pour former le corps,
et dans laquelle les parois supérieure et inférieure de corps sont unies ou liées ensemble au moyen de leurs parties de bordure périphériques respectives soudées ou brasées ensemble, ou en variante sont collées ensemble par un adhésif;
éventuellement dans laquelle les parties de bordure périphériques respectives des parois supérieure et inférieure de corps par l'intermédiaire desquelles les parois supérieure et inférieure de corps sont unies ou liées ensemble pour former le corps fournissent en outre un ou plusieurs emplacements ou régions au niveau desquels sont prévus des moyens d'interconnexion par lesquels l'unité est interconnectable à une ou à plusieurs unités adjacentes de type panneau solaire.

6. Unité de panneau solaire selon une quelconque revendication précédente, dans laquelle le volume interne à l'intérieur du corps comprend un ou plusieurs vides ou espaces à l'intérieur, de sorte que le corps de l'unité est sensiblement ou au moins partiellement creux, moyennant quoi le corps peut flotter sur l'eau lorsqu'il est placé dessus;
éventuellement dans laquelle soit:
(i) l'un ou les plusieurs vides ou espaces contiennent de l'air ou un autre gaz ou mélange de gaz; soit
(ii) l'un ou les plusieurs vides ou espaces contiennent un matériau expansé ou poreux.

7. Unité de panneau solaire selon une quelconque revendication précédente, dans laquelle les parois supérieure et inférieure de corps comprennent chacune leur propre réseau ou série respectif de fossettes, dépressions, indentations, évidements ou autres déformations de surface formées à l'intérieur, et le motif ou l'agencement des réseaux ou séries de déformations de surface est sensiblement identique ou symétrique les uns par rapport aux autres dans chacune des feuilles de paroi, moyennant quoi les uns respectifs des fossettes, des dépressions, des indentations, des évidements ou des autres déformations de surface formés dans l'une des feuilles supérieure et inférieure de paroi correspondent sensiblement et s'étendent ou font saillie vers l'intérieur dans le volume ou l'espace interne à l'intérieur du corps vers les uns respectifs des fossettes, des dépressions, des indentations, des évidements ou des autres déformations de surface formés dans l'autre des feuilles de paroi supérieure et inférieure;
éventuellement dans laquelle les fossettes, dépressions, indentations, évidements ou autres déformations de surface se faisant mutuellement face intérieurement dans chacune des deux feuilles de paroi sont d'une profondeur suffisante pour qu'ils se rencontrent, se touchent ou butent l'un sur l'autre intérieurement, éventuellement par paires mutuellement opposées de ceux-ci, à l'intérieur du volume interne du corps, et les paires de fossettes, de dépressions, d'indentations, d'évidements ou d'autres déformations de surface se rencontrant, se touchant ou venant en butée ainsi intérieurement sont unies ou liées les uns aux autres par soudage ou par un adhésif.

8. Unité de panneau solaire selon une quelconque revendication précédente, dans laquelle le ou chaque module photovoltaïque monté sur la surface supérieure de la paroi supérieure de corps est monté de sorte qu'il est en contact thermique avec le matériau d'au moins une ou plusieurs parties de la paroi supérieure de corps, éventuellement le matériau d'au moins certaines parties de la paroi supérieure de corps.

9. Unité de panneau solaire selon une quelconque revendication précédente, dans laquelle est prévu une couche, une bande ou un volume d'un matériau desséchant entre, ou dans un espace entre, le ou chaque module photovoltaïque et la surface supérieure de la paroi supérieure de corps sur laquelle il est monté.

10. Unité de panneau solaire selon une quelconque revendication précédente, dans laquelle le ou chaque module photovoltaïque monté sur la surface supérieure de la paroi supérieure de corps, éventuellement sur une partie centrale supérieure ou un plateau de celui-ci, est monté dessus avec l'aide ou l'inclusion de moyens d'étanchéité, éventuellement des moyens périphériques d'étanchéité,
et dans laquelle le ou chaque module photovoltaïque est monté sur la surface supérieure de la paroi supérieure de corps en raison de sa liaison à celle-ci au moins le long d'une ou de plusieurs parties ou régions périphériques ou de bord de l'unité de panneau solaire grâce à des moyens de liaison qui en outre servent de moyens d'étanchéité;
éventuellement (i) dans laquelle le moyen périphérique d'étanchéité et/ou de liaison comprend une bande ou un corps allongé d'un matériau ou d'une composition d'étanchéité et/ou de liaison;
et en outre éventuellement (ii) dans laquelle le moyen périphérique d'étanchéité et/ou de liaison comprend une bande ou un corps allongé d'un matériau ou d'une composition d'étanchéité et/ou de liaison, et la bande périphérique d'étanchéité et/ou de liaison ou le corps allongé du matériau/de la composition d'étanchéité et/ou de liaison est prévu ou situé au niveau d'un côté extérieur d'une partie étagée ou en rampe de la paroi supérieure de corps d'unité ou sur celui-ci ou à proximité de celui-ci, qui définit une partie de plateau de celui-ci sur lequel le(s) module(s) photovoltaïque(s) respectif(s) est/sont monté(s).

11. Unité de panneau solaire selon la revendication 10, dans laquelle (ii) est présent ou satisfait et une ou plusieurs parties du ou de chaque module photovoltaïque surplombe la partie en escalier ou en rampe de la partie de plateau de paroi supérieure de corps de l'unité sur une courte distance allant jusqu'à environ 15 ou 20 ou 25 ou 30 ou 35 ou 40 mm, moyennant quoi un site d'étanchéité et/ou de liaison allongé est prévu qui s'étend autour, éventuellement sensiblement complètement et continuellement autour, de la périphérie ou des bords de l'unité de panneau solaire entre la/les partie(s) en surplomb du ou de chaque module photovoltaïque et une partie de bordure périphérique du corps d'unité;
éventuellement dans laquelle l'un des éléments (iii) ou (iv) suivants est présent ou satisfait:
(iii) dans laquelle le ou chaque module photovoltaïque comprend une pluralité de cellules photovoltaïques individuelles interconnectées prises en sandwich entre une ou plusieurs couches supérieures et au moins une couche de support arrière, et l'une ou les plusieurs couches supérieures a/ont sensiblement les mêmes dimensions faciales et la même étendue latérale ou largeur latérale d'au moins une couche de support arrière, et dans laquelle le site d'étanchéité et/ou de liaison allongé s'étendant autour, éventuellement sensiblement complètement et continuellement autour de la périphérie ou des bords de l'unité de panneau solaire, assure ainsi ladite étanchéité et/ou liaison entre ladite au moins une couche de support arrière de la/des partie(s) en surplomb du ou de chaque module photovoltaïque et une partie de bordure périphérique du corps de l'unité; ou
(iv) dans laquelle le ou chaque module photovoltaïque comprend une pluralité de cellules photovoltaïques individuelles interconnectées prises en sandwich entre une ou plusieurs couches supérieures et au moins une couche de support arrière, et l'au moins une couche de support arrière a des dimensions faciales tronquées ou raccourcies ou une largeur ou une étendue latérale réduite par rapport aux une ou plusieurs couches supérieures du ou de chaque module, et dans laquelle le site allongé d'étanchéité et/ou de liaison s'étendant autour, éventuellement sensiblement complètement et continuellement autour de la périphérie ou des bords de l'unité de panneau solaire fournit ainsi la ladite étanchéité et/ou liaison entre la couche supérieure de la/des partie(s) en surplomb du ou de chaque module photovoltaïque et une partie de bordure périphérique du corps d'unité.

12. Unité de panneau solaire selon une quelconque revendication précédente, comprenant en outre au moins un, éventuellement une pluralité de moyens d'interconnexion pour interconnecter ladite unité à une autre, comme une unité de panneau solaire également indépendamment selon une quelconque revendication précédente,
et dans laquelle le ou chaque moyen d'interconnexion comprend un élément d'interconnexion, le ou chaque élément d'interconnexion étant construit et configuré pour être fixé à la fois à un premier et à un second corps d'unité de panneau solaire, moyennant quoi lesdites première et seconde unités de panneau solaire sont interconnectables par l'intermédiaire dudit élément d'interconnexion ou dudit élément d'interconnexion respectif;
éventuellement dans laquelle le ou chaque élément d'interconnexion comprend une partie d'interconnexion élastique ou flexible ou élastiquement flexible qui est élastiquement flexible dans chacune de deux directions opposées, moyennant quoi, lorsqu'elle est fixée aux premier et second corps d'unité de panneau solaire, elle fournit une liaison élastiquement flexible bidirectionnelle ou « push-pull » entre eux;
et en outre, éventuellement, dans laquelle le ou chaque élément d'interconnexion prend la forme de, ou comprend une bande, une feuille ou un panneau de matériau résilient ou flexible ou élastiquement flexible, éventuellement dans laquelle la ou chaque bande, feuille ou panneau d'interconnexion peut être fixé à un site de connexion respectif sur l'un respectif du premier ou du second corps d'unité de panneau solaire au moyen d'un certain nombre de broches d'ancrage, de goujons, de rivets, de vis, de boulons, de clips ou d'autres éléments de fixation ou toute combinaison de deux des éléments d'ancrage/de fixation susmentionnés ou plus.

13. Procédé de fabrication d'un corps destiné à être utilisé dans une unité de panneau solaire, le corps étant destiné à porter un ou plusieurs modules photovoltaïques de l'unité, dans lequel le corps comprend une paroi supérieure et une paroi inférieure, et un volume interne situé entre des parois supérieure et inférieure de sorte que le corps peut flotter sur l'eau lorsqu'il est placé dessus,
dans lequel le procédé comprend la formation d'au moins l'une des parois supérieure et inférieure de corps en l'étirant ou en l'emboutissant profondément à partir d'un matériau en feuille;
et dans lequel le procédé comprend en outre le montage sur une surface supérieure de la paroi supérieure de corps des un ou plusieurs modules photovoltaïques;
et en outre dans lequel le procédé comprend en outre la formation de l'une ou des deux parois supérieure et/ou inférieure du corps avec un réseau ou une série de fossettes, de dépressions, d'indentations, d'évidements ou d'autres déformations de surface qui s'étendent ou font saillie dans le volume ou l'espace interne à l'intérieur du corps de manière à créer à l'intérieur une série ou un réseau de cloisons, de chicanes internes ou d'autres éléments internes de division d'espace ou de réduction d'espace interne.

14. Réseau de panneaux solaires comprenant une pluralité d'unités de panneau solaire, chaque unité de panneaux solaires étant une unité de panneaux solaires selon l'une quelconque des revendications 1 à 12.

15. Kit ou ensemble de composants comprenant une pluralité d'unités de panneau solaire, chacune étant une unité de panneaux solaires selon l'une quelconque des revendications 1 à 12, dans lequel des paires desdites unités de panneau solaire sont interconnectables ensemble pour former un réseau de panneaux solaires selon la revendication 14;
éventuellement dans lequel le kit ou l'ensemble comporte en outre une pluralité d'éléments d'interconnexion tels que définis dans la revendication 12.

16. Procédé de formation d'un réseau de panneaux solaires comprenant une pluralité d'unités de panneau solaire, chacune étant une unité de panneaux solaires selon l'une quelconque des revendications 1 à 12, le procédé comprenant:
la fourniture de ladite pluralité desdites unités de panneau solaire;
la fourniture d'un ou de plusieurs, ou éventuellement d'une pluralité de groupes d'éléments d'interconnexion comprenant chacun une partie d'interconnexion respective élastique ou flexible ou élastiquement flexible; et
l'utilisation de ladite/desdites partie(s) d'interconnexion respective(s) desdits éléments d'interconnexion respectifs, l'interconnexion des unités de panneau solaire d'au moins une paire de celles-ci, éventuellement une pluralité de paires de celles-ci, pour former ledit réseau de panneaux solaires.

17. Procédé de production d'électricité à partir de la lumière du soleil en utilisant une unité de panneau solaire selon l'une quelconque des revendications 1 à 12, ou en utilisant un réseau de panneaux solaires selon la revendication 14, le procédé comprenant:
la fourniture de ladite unité de panneau solaire ou dudit réseau de panneaux solaires;
l'installation ou le déploiement de ladite unité de panneau solaire ou dudit réseau de panneaux solaires dans ou à un endroit marin ou à un autre emplacement aquatique de sorte que le ou chacun desdits corps d'unité de panneau solaire flotte sur une surface de l'eau ou à proximité de celle-ci; et
le fonctionnement de la ou de chaque dite unité de panneau solaire pour générer et collecter de l'électricité à partir de celle-ci lors de l'incidence de la lumière du soleil sur le ou chaque module photovoltaïque monté sur la surface supérieure de la paroi supérieure du ou de chaque dit corps d'unité de panneau solaire.
